# EUROPÄISCHE PATENTSCHRIFT

(11) **EP 2 990 281 B1**
(45) Veröffentlichungstag und Bekanntmachung des Hinweises auf die Patenterteilung: **19.12.2018**
(21) Anmeldenummer: 14182907.7
(22) Anmeldetag: 29.08.2014
(51) Int. Cl.: B60T 17/04, B60D 1/64, F16L 37/24

(54) **Kupplungskopf**
Coupling head
Tête d'accouplement

(43) Veröffentlichungstag der Anmeldung: 02.03.2016
(73) Patentinhaber: Haldex Brake Products Aktiebolag, 261 24 Landskrona (SE)
(72) Erfinder: Heer, Siegfried, 69168 Wiesloch (DE)
(74) Vertreter: REHBERG HÜPPE + PARTNER

(56) Entgegenhaltungen:
- EP-A1- 0 235 610
- EP-A1- 0 540 817
- EP-A1- 0 595 336
- EP-A1- 0 616 161
- EP-A2- 0 167 968
- DE-A1- 1 780 092
- DE-A1- 2 820 546
- DE-B- 1 080 875
- DE-B4- 19 931 162
- FR-A1- 2 443 359
- GB-A- 1 163 184
- US-A- 747 733
- US-A- 3 554 230

## Beschreibung

### TECHNISCHES GEBIET DER ERFINDUNG

Die Erfindung betrifft einen Kupplungskopf zur pneumatischen Verbindung eines Zugfahrzeugs und eines Anhängers oder zur pneumatischen Verbindung von zwei Anhängern mit den Merkmalen des Oberbegriffs von Patentanspruch 1. Insbesondere kann ein derartiger Kupplungskopf zur Verbindung einer Bremssteuerleitung oder einer Vorratsleitung eines Zugfahrzeugs mit einer pneumatischen Bremsanlage eines Anhängers zum Einsatz kommen.

### STAND DER TECHNIK

CH 317732 A offenbart einen einem Zugfahrzeug zugeordneten Kupplungskopf und einen einem Anhänger zugeordneten Kupplungskopf, die jeweils eine Muschelschalenform aufweisen mit einem Übergreifflansch, mittels dessen die beiden Kupplungsköpfe pneumatisch dicht miteinander verbunden werden können. Jeder Kupplungskopf verfügt über einen Dichtungsring, welche für eine Abdichtung der Kupplungsköpfe gegeneinander gepresst werden. In den zugfahrzeugseitigen Kupplungskopf ist ein in Richtung des Anhängers sperrendes Rückschlagventil integriert, welches mit Montage der beiden Kupplungsköpfe über einen Nockentrieb automatisch bewegungsgesteuert in eine permanente Öffnungsstellung überführt wird. In dem anhängerseitigen Kupplungskopf ist ein von der Druckluft durchströmtes Filterelement in Form eines Siebkorbes integriert, welches dem Auffangen von Verunreinigungen dienen soll. Gemäß CH 317732 A können der Siebkorb, das Rückschlagventil und die Dichtungsringe durch Öffnungen in den Kupplungsköpfen in darin vorgesehene Kammern, die im gekuppelten Zustand fluidisch miteinander verbunden sind, eingesetzt werden. Die Sicherung des Siebkorbs des Rückschlagventils und der Dichtungsringe erfolgt dabei durch Gewinderinge, die in im Bereich der Öffnungen vorgesehene Innengewinde eingeschraubt werden.

DE 2 037 008 A offenbart Kupplungsköpfe für eine Zwei- oder Mehrleitungs-Druckluftbremsanlage für einen Anhängerbetrieb, wobei zwischen Zugfahrzeug und Anhänger für eine Vorratsleitung, eine Bremssteuerleitung und ggf. auch eine Hilfsbremsleitung lösbare Verbindungen über die Kupplungsköpfe erforderlich sind. Der zugfahrzeugseitige, der Vorratsleitung zugeordnete Kupplungskopf besitzt ein Betätigungselement in Form eines Dicht- und Steuerkolbens, welcher ohne montierten anhängerseitigen Kupplungskopf über eine Feder in eine Sperrstellung beaufschlagt ist und bei Kopplung mit dem anhängerseitigen Kupplungskopf über eine Ringdichtung des anhängerseitigen Kupplungskopfes von einer Sperrstellung in eine Öffnungsstellung überführt wird, was entgegen der Beaufschlagung durch die Feder erfolgt. Der Dicht- und Steuerkolben besitzt eine Schräg- oder Nockenfläche. Über die Schräg- oder Nockenfläche betätigt der Dicht- und Steuerkolben auf dem Weg von der Sperrstellung zu der Öffnungsstellung einen Stößel eines Absperrventilkörpers des zugfahrzeugseitigen Kupplungskopfes, der sich über eine Feder an einem vom Gehäuse ausgebildeten Ventilsitz abstützt und durch die von einer Feder ausgeübte Federkraft in Richtung seiner Schließstellung beaufschlagt ist, in die Öffnungsrichtung des Absperrventils. Die Dichtung des anhängerseitigen Kupplungskopfes ist als elastische Ringdichtung ausgebildet, die auf die Oberseite des Dicht- und Steuerkolbens des zugfahrzeugseitigen Kupplungskopfes aufgepresst wird, wenn die Kupplungsköpfe bajonettartig ineinander gedreht werden. Die Dichtung des anhängerseitigen Kupplungskopfes besitzt einen L-förmigen Halblängsschnitt, wobei ein Schenkel des L parallel zur Längsachse orientiert ist und eine Führungsfläche für den Druckluftstrom bildet, während der andere Schenkel des L sich radial nach außen erstreckt und formschlüssig von einem Gehäuse des anhängerseitigen Kupplungskopfes aufgenommen und gehalten ist. Der zugfahrzeugseitige, der Bremssteuerleitung zugeordnete Kupplungskopf besitzt grundsätzlich auch einen Dicht- und Steuerkolben, welcher mit der Dichtung mit L-förmigem Halblängsschnitt des anhängerseitigen Kupplungskopfes zusammenwirkt. Allerdings ist hier der Dicht- und Steuerkolben ergänzend mit einem Ventilsitz ausgestattet, der zusammen mit einem Ventilköper ein Absperrventil bildet. Der zugfahrzeugseitige Kupplungskopf besitzt einen Steuerkolben in einer Steuerkammer, die mit dem zugfahrzeugseitigen, der Vorratsleitung zugeordneten Kupplungskopf stromabwärts des Absperrventils dieses Kupplungskopfes gekoppelt ist. Der Steuerkolben ist als Differentialkolben ausgebildet, auf welchen sowohl der zugfahrzeugseitige Bremssteuerdruck als auch der Vorratsleitungsdruck stromabwärts des Absperrventils einwirkt. Wird die Verbindung der beiden der Vorratsleitung zugeordneten Kupplungsköpfe gelöst und bricht infolgedessen der Druck in der Steuerkammer ein, führt dies infolge einer Schließbewegung des Steuerkolbens zur Schließung des Sperrventils in dem zugfahrzeugseitigen, der Bremssteuerleitung zugeordneten Kupplungskopf, indem der Ventilkörper an den zugeordneten Ventilsitz angepresst wird. Die Kupplungsköpfe sind hier als "automatische Kupplungsköpfe" bezeichnet. Zur Sicherung der Bauelemente, wie dem Dicht- und Steuerkolben, dem Absperrventilkörper und dem Differentialkolben, an einem Gehäuse des Kupplungskopfes weisen die Bauelemente jeweils einen Ringbund auf, über den sie in in dem Gehäuse gebildeten Kammern verankert sind.

DE 2 015 753 A offenbart einen Kupplungskopf mit einem an eine Druckluftquelle angeschlossenen Hauptkanal, der durch Kupplung des Kupplungskopfes mit einem Gegenkupplungskopf mit einem Anschlusskanal des Gegenkupplungskopfes fluidisch verbunden werden kann. Der Hauptkanal mündet in eine Kammer des Gehäuses des Kupplungskopfes. In der Kammer ist ein Ventilelement angeordnet, das sich über eine Feder an einem Boden der Kammer abstützt und durch die Feder in Richtung seiner geschlossenen Stellung beaufschlagt ist. In der geschlossenen Stellung liegt ein Dichtring des Ventilelements, der auf einen Grundkörper des Ventilelements aufgeschoben ist, dichtend an einem Ventilsitz an. Wenn der Kupplungskopf mit dem Gegenkupplungskopf verbunden wird, wird das Ventilelement von einer Ringdichtung des Gegenkupplungskopfes entgegen der wirkenden Federkraft in seine geöffnete Stellung betätigt, in der der Hauptkanal des Kupplungskopfes über eine in dem Ventilelement vorgesehene Querbohrung mit dem Anschlusskanal des Gegenkupplungskopfes fluidisch verbunden ist. Entlang seiner Längsachse weist das Ventilelement eine Durchgangsausnehmung auf, über die der Anschlusskanal des Gegenkupplungskopfes mit einem Steuerluftkanal des Kupplungskopfes fluidisch verbunden ist, welcher beispielsweise zum Öffnen eines in einer weiteren Leitung befindlichen Absperrventils dienen kann. In die Durchgangsausnehmung ist eine Innengewinde eingeschnitten, in das eine Zugvorrichtung mit seinem Außengewinde eingeschraubt werden kann. Durch Zug an der Zugvorrichtung kann das Ventilelement aus der Kammer herausgezogen werden. Dabei ist vorgesehen, dass der Dichtring beim Herausziehen von dem Grundkörper des Ventilelements abgerollt oder abgeschert wird, womit sich das Ventilelement aus dem Kupplungskopf entnehmen lässt. Es kann dann ein neuer Dichtring in die Kammer eingelegt werden, der beim Einschieben des Grundkörpers auf diesen aufgeschoben wird.

Aus der Druckschrift DE 1 080 875 A ist ein Kupplungskopf mit einem Ventil, das durch Kupplung des Kupplungskopfes mit einem Gegenkupplungskopf in seine geöffnete Stellung überführbar ist, bekannt, bei dem sich ein Ventilelement des Ventils über eine Feder an einem Gehäuse des Kupplungskopfes abstützt und in Richtung seines von einer Ringdichtung gebildeten Ventilsitzes beaufschlagt ist. Die Feder, das Ventilelement und die Ringdichtung können durch eine Öffnung in dem Gehäuse in eine in dem Gehäuse gebildete Kammer eingesetzt werden. Die Sicherung erfolgt dabei durch einen Gewindering, der in ein im Bereich der Öffnung vorgesehenes Innengewinde eingeschraubt wird.

Die Druckschrift DE 34 25 113 A1 offenbart einen Kupplungskopf mit einem Ventil, das durch Kupplung des Kupplungskopfes mit einem Gegenkupplungskopf in seine geöffnete Stellung überführbar ist. Der Ventilsitz ist von einem nach radial nach innen ragenden Absatz einer Hülse ausgebildet, wobei sich ein bolzenartig ausgebildeter Ventilkörper durch die Hülse erstreckt und in der geschlossenen Stellung des Ventils mit seinem Kopf an dem nach innen ragenden Absatz anliegt. An seinem Schaft ist der Ventilkörper mit einem Außengewinde versehen, wobei der Ventilkörper durch Einschrauben des Außengewindes in eine entsprechendes Innengewinde einer Bohrung in dem Gehäuse mit diesem verbunden ist. Die Hülse ist dabei durch die Wechselwirkung des Kopfes des Ventilkörpers mit dem nach innen ragenden Absatz der Hülse an dem Gehäuse verankert.

DE 199 31 162 B4 offenbart einen Kupplungskopf mit einem Gehäuse, einer in dem Gehäuse gebildeten Kammer und einem Deckel zum Verschließen einer in der Kammer gebildeten Öffnung. Weiterhin weist der Kupplungskopf ein in die Kammer eingesetztes Filterelement auf. Das Filterelement weist einen käfigartigen Grundkörper auf, dessen Innenraum durch einen Ringkörper in Strömungsrichtung der Druckluft frei zugänglich ist, während ein Austritt aus dem Innenraum in Strömungsrichtung ausschließlich durch Siebe aus einem aus Kunststoff bestehenden, feinmaschigen Filtermaterial möglich ist. Das Filtermaterial ist mit dem Grundkörper verklebt oder als Folge einer Wärmebehandlung verschmolzen. An dem Ringkörper stützt sich auf einer Seite eine erste Druckfeder ab, während an dem Ringkörper auf der gegenüberliegenden Seite ein Anschlagring abgestützt ist, welcher durch eine zweite Druckfeder entgegengesetzt zur ersten Druckfeder beaufschlagt ist. Der Anschlagring bildet einen Ventilkörper für ein Doppelventil. In einer Schließstellung eines ersten Ventils des Doppelventils liegt der Anschlagring dicht an dem Ringkörper an, während der Anschlagring in einer Schließstellung des zweiten Ventils des Doppelventils dicht an einem von dem Gehäuse des Kupplungskopfes gebildeten Ventilsitz anliegt, welcher radial außenliegend von dem Ring angeordnet ist. Ist das Filterelement nicht infolge von Verschmutzung verstopft, sind beide Ventile geschlossen, so dass die Druckluft den Filter passieren muss. Baut sich hingegen mit zunehmender Verstopfung des Filterelements stromaufwärts des Filterelements ein größerer Druck auf, kann dieser mit Überschreiten eines Öffnungsdrucks das Filterelement mit dem Anschlagring gemeinsam unter zusätzlicher Beaufschlagung der zweiten Druckfeder von dem von dem Gehäuse gebildeten Ventilsitz abheben, womit druck- und verstopfungsabhängig ein Bypass für die Druckluft geschaffen ist. Der Kupplungskopf ist aber auch für eine umgekehrte Strömungsrichtung geeignet. Baut sich für diese umgekehrte Strömungsrichtung bei Verstopfung des Filterelements ein Druckgefälle auf, kann auch für die umgekehrte Strömungsrichtung ein Bypass zur Wirkung gebracht werden, was in diesem Fall durch Öffnung des ersten Ventils erfolgt. Unter zusätzlicher Beaufschlagung der ersten Druckfeder wird hierzu das Filterelement mit dem Ringkörper von dem Anschlagring weg bewegt, womit zwischen dem Ringkörper und dem Anschlagring ein Bypass in Form eines Übertrittsquerschnitts geschaffen wird. DE 199 31 162 B4 offenbart unterschiedliche Ausgestaltungsformen und Einbaumöglichkeiten für das Filterelement und das Doppelventil. Gemäß einer Ausführungsform werden die beiden Druckfedern, das Filterelement und der Anschlagring durch die in der Kammer gebildete Öffnung eingesetzt, wobei die Öffnung anschließend durch Einschrauben des Deckels verschlossen wird. Alternativ wird anstelle des Einsatzes eines geschraubten Deckels vorgeschlagen, den Deckel mit einem schnelllöslichen Sicherungsring oder sonstigem Sicherungsdraht an dem Gehäuse zu sichern.

### AUFGABE DER ERFINDUNG

Der Erfindung liegt die Aufgabe zugrunde, einen Kupplungskopf vorzuschlagen, der hinsichtlich des Herstellungs- und/oder Montage- und Demontageaufwands verbessert ist.

### LÖSUNG

Die Aufgabe der Erfindung wird erfindungsgemäß mit den Merkmalen des unabhängigen Patentanspruchs 1 gelöst. Weitere bevorzugte erfindungsgemäße Ausgestaltungen sind den abhängigen Patentansprüchen zu entnehmen.

### BESCHREIBUNG DER ERFINDUNG

Die Erfindung betrifft einen Kupplungskopf zur pneumatischen Verbindung eines Zugfahrzeugs und eines Anhängers oder zur pneumatischen Verbindung von zwei Anhängern mit einem Gehäuse, einer Kammer in dem Gehäuse und einem Bauelement, welches in der Kammer angeordnet ist. Weiterhin weist die Kammer eine Öffnung auf, die über ein an dem Gehäuse montiertes Verschlusselement verschlossen ist.

Die Erfindung beruht zunächst auf der Erkenntnis, dass die Befestigung des Verschlusselements an dem Gehäuse nicht zwingend über eine Schraubverbindung oder mittels eines Sicherungsrings, wie es aus dem Stand der Technik bekannt ist, erfolgen muss, sondern dass auch eine andere Befestigungsmöglichkeit besteht,
- welche einerseits den Anforderungen im Betrieb genügt, beispielsweise den rauen Einsatzbedingungen eines Kupplungskopfes im Betrieb eines Nutzfahrzeugs, für welchen sich trotz Vibrationen die Kopplung nicht lösen darf, und/oder den Anforderungen hinsichtlich der erforderlichen Abdichtung der Kammer, und
- welche andererseits eine besonders einfache Montage und/oder Demontage, beispielsweise zu Wartungszwecken, ermöglicht.

Andererseits haben der Erfindung zugrunde liegende Überlegungen dazu geführt, dass die Befestigung des Verschlusselements über eine Schraubverbindung oder über einen Sicherungsring Nachteile mit sich bringen können:
- Für eine Schraubverbindung müssen das Verschlusselement und das Gehäuse mit einem Gewinde ausgestattet werden, was den Herstellungsaufwand erhöht. Insbesondere wenn für das Verschlusselement und/oder das Gehäuse kein hochfestes Material oder Metall verwendet wird, sondern diese aus Kunststoff bestehen, ist nicht auszuschließen, dass das in den Kunststoff eingeschnittene Gewinde versagen oder die Beanspruchung zumindest nicht dauerhaft aushalten würde.
- Bei der Befestigung mittels eines Sicherungsrings oder eines Sicherungsdrahts müssen das Verschlusselement und die Kammer zwar nicht mit einem Gewinde versehen werden. Allerdings liegt mit dem Sicherungsring oder Sicherungsdraht ein zusätzliches Bauteil vor, das für die Montage des Verschlusselements an dem Gehäuse bereitgestellt werden muss. Weiterhin ist die Befestigung des Verschlusselements an dem Gehäuse infolge von Fertigungstoleranzen einerseits mit einem Spiel zwischen dem Sicherungsring und dem Gehäuse und andererseits mit einem Spiel zwischen dem Ring und dem Verschlusselement behaftet, wodurch das Verschlusselement die Öffnung der Kammer unter Umständen nicht dicht verschließt oder die Wahl enger Fertigungstoleranzen zwecks Reduzierung des Spiels auf ein akzeptables, die Abdichtung gewährleistendes Maß erforderlich ist.

Erfindungsgemäß wird eine neue Art der Montage des Verschlusselements an dem Gehäuse vorgeschlagen, indem erfindungsgemäß ein Rast- oder Sperrelement und ein Absatz vorgesehen sind, die integral mit dem Verschlusselement und dem Gehäuse ausgebildet sind, wobei das Verschlusselement unter Ausbildung einer Rast- oder Sperrverbindung an dem Gehäuse montiert ist, bei welcher das Rast- oder Sperrelement des Gehäuses oder des Verschlusselements den Absatz des Verschlusselements oder des Gehäuses hintergreift. Der Einsatz einer Rast- oder Sperrverbindung zur Kopplung des Kopplungselements mit dem Gehäuse ist beispielsweise vorteilhaft hinsichtlich der Montage des Verschlusselements mit dem Gehäuse und/oder hinsichtlich der Demontage des Verschlusselements von dem Gehäuse. Insbesondere wenn es sich um eine lösbare Verbindung des Verschlusselements mit dem Gehäuse handelt, ist es auf einfache Weise möglich, die Kammer z. B. zu Wartungszwecken oder zum Austausch des in der Kammer angeordneten Bauteils zu öffnen. Für einen erhöhten Schutz im Betrieb kann es jedoch auch vorteilhaft sein, wenn es sich bei der Rast- oder Sperrverbindung um eine dauerhafte Verbindung handelt, die nicht oder nur unter Aufbringung von sehr großen Lösekräften gelöst werden kann. Weiterhin ermöglicht die Montage des Verschlusselements mit dem Gehäuse über eine Rast- oder Sperrverbindung auch die Fertigung eines Verschlusselements und/oder des Gehäuses aus Kunststoff, ohne dass hierdurch Einschränkungen hinsichtlich der Sicherheit oder Dauerhaftigkeit der Montage in Kauf genommen werden müssen, wie dieses beispielsweise für den Einsatz einer Schraubverbindung der Fall sein kann. Weiterhin bedarf es auch nicht zwingend eines zusätzlichen Sicherungsmittels, da das Rast- oder Sperrelement und der Absatz zur Ausbildung der Rast- oder Sperrverbindung integral mit dem Verschlusselement und dem Gehäuse ausgebildet sind.

Im Rahmen der vorliegenden Erfindung wird unter einem Rastelement, welches für eine Rastverbindung in Wechselwirkung mit einem Absatz tritt, insbesondere eine Verbindung verstanden, bei welcher das Rastelement elastisch verformt oder bewegt wird und angesichts einer elastischen Verformung oder Bewegung den Absatz hintergreift oder hinter diesen einschnappt. Werden hinreichende Lösekräfte auf die Rastverbindung ausgeübt, führt dies, insbesondere durch Ein- und Ausführschrägen an dem Rastelement und/oder dem Absatz, zu einer elastischen Verformung oder Bewegung des Rastelements mit einem Lösen der Rastverbindung, ohne dass es zu einer Beschädigung des Rastelements und/oder des Absatzes kommt.

Hingegen wird im Rahmen der vorliegenden Erfindung unter Sperrverbindung insbesondere eine Kopplung oder Verbindung verstanden, bei welcher ein Sperrelement nach Hintergreifen des Absatzes, unter Umständen auf ähnliche Weise mit elastischer Verformung oder Bewegung wie für das Rastelement beschrieben, auch bei Aufbringung von in Demontagerichtung wirkenden Lösekräften auf die derart gebildete Sperrverbindung nicht gelöst wird. Vielmehr setzt das Lösen der Sperrverbindung über Lösekräfte, die ausschließlich in Demontagerichtung auf das Sperrelement oder den Absatz wirken, die plastische Verformung oder Zerstörung des Sperrelements, eines das Sperrelement haltenden Rast- oder Sperrarms und/oder des Absatzes voraus. Um die Sperrverbindung lösen zu können, ohne dass dazu eine plastische Verformung oder Zerstörung in Kauf genommen werden muss, muss eine separate Betätigung des Sperrelements mit Lösekräften erfolgen, welche nicht oder zumindest nicht nur in Demontagerichtung wirken, sondern auch quer dazu.

Wie bereits zuvor erläutert, kann eine Verbindung zwischen dem Rastelelement und dem Absatz bei Aufbringung hinreichender Lösekräfte durchaus durch elastische Verformung oder Bewegung des Rastelements gelöst werden. Sind die Anlageflächen zwischen dem Sperrelement und dem Absatz quer zur Löserichtung orientiert, führt die Aufbringung von Lösekräften nicht zu einer elastischen Verformung oder Bewegung des Sperrelements, so dass tatsächlich die Verbindung nicht ohne Weiteres durch Aufbringung von Lösekräften gelöst werden kann. Der Unterschied, ob eine Rast- oder eine Sperrverbindung gebildet ist, kann somit in der Gestaltung der Anlageflächen zwischen Rast- oder Sperrelement und Ausnehmung bestehen. Die zum Lösen der Rast- oder Sperrverbindung erforderlichen Lösekräfte hängen insbesondere ab von
- den Kräften, die zum elastischen Verformen und/oder Bewegen des Rast- oder Sperrelements erforderlich sind, also beispielsweise von einer Steifigkeit des hierzu eingesetzten Materials oder der Länge eines abstützenden Arms oder Federelements,
- der Geometrie des Rast- oder Sperrelements und/oder des Absatzes insbesondere einer Neigung der Anlageflächen zwischen Absatz und Rast- oder Sperrelement,
- dem Ausmaß, in welchem das Rast- oder Sperrelement den Absatz hintergreift, und/oder
- einer Reibung zwischen Absatz und Rast- oder Sperrelement.

Für die Anordnung des Rast- oder Sperrelements einerseits und des Absatzes andererseits gibt es im Rahmen der vorliegenden Erfindung insbesondere zwei Varianten: Durchaus möglich ist, dass das Rast- oder Sperrelement integral mit dem Gehäuse ausgebildet ist. Beispielsweise kann das Gehäuse im Bereich der Öffnung der Kammer ein radial nach außen elastisch verformbares oder bewegbares Rast- oder Sperrelement aufweisen, welches über einen Rast- oder Sperrarm verfügt, an welchem endseitig eine Rast- oder Sperrnase angeformt ist. Die Rast- oder Sperrnase kann dann die Rast- oder Sperrverbindung mit einem Absatz ausbilden, der beispielsweise von einer Umfangsnut oder einer Stirnfläche des Verschlusselements ausgebildet ist.

Für eine erfindungsgemäße Variante ist allerdings das Rast- oder Sperrelement integral mit dem Verschlusselement ausgebildet, beispielsweise mit einem Rast- oder Sperrarm mit einer endseitigen Rast- oder Sperrnase, welche einen von dem Gehäuse gebildeten Absatz hintergreift. Der Absatz ist dabei von einer Innenfläche des Gehäuses, die eine Ausnehmung für das Verschlusselement begrenzt, ausgebildet. Beispielsweise kann das Gehäuse dazu im Bereich der Ausnehmung für das Verschlusselement mit einer in Umfangsrichtung umlaufenden Rast- oder Sperrnut ausgebildet sein. Diese Anordnung kann den Vorteil habe, dass das Rast- oder Sperrelement, welches im Vergleich zu dem Absatz unter Umständen anfälliger ist für Beschädigungen, nicht von dem Gehäuse des Kupplungskopfes ausgebildet ist, dessen Austausch bei einer Beschädigung des Rast- oder Sperrelements mit größerem Aufwand und/oder mit höheren Kosten verbunden sein könnte.

Eine erfindungsgemäße Ausgestaltung schlägt vor, dass die Montage des Verschlusselements mit dem Gehäuse über eine Bajonettverbindung erfolgt, welche über die Rast- oder Sperrverbindung des Verschlusselements mit dem Gehäuse gegenüber einer Drehung zum Lösen der Bajonettverbindung gesichert ist. Das Rast- oder Sperrelement kann dabei derart ausgebildet sein, dass es im Wesentlichen quer zur Fügerichtung des Verschlusselements mit dem Gehäuse elastisch verformbar oder bewegbar ist, wobei das Rast- oder Sperrelement beim Drehen des Verschlusselements gegenüber dem Gehäuse, um die Bajonettverbindung herzustellen, hinter einen sich im Wesentlichen in Fügerichtung und radial zur Drehachse erstreckenden Absatz einschnappt. Das Rast- oder Sperrelement kann aber auch derart ausgebildet sein, dass es in Fügerichtung elastisch verformbar oder bewegbar ist.

Das Gehäuse und/oder das Verschlusselement können aus einem beliebigen Material hergestellt sein. Beispielsweise können das Gehäuse und/oder das Verschlusselement aus Metall hergestellt sein. Gemäß einer besonderen Ausführungsform der Erfindung sind das Gehäuse und/oder das Verschlusselement jedoch aus Kunststoff hergestellt. Dies ermöglicht eine besonders kostengünstige Herstellung des Kupplungskopfes und/oder die Herstellung eines Kupplungskopfes mit besonders geringem Gewicht.

Grundsätzlich möglich ist der Einsatz mindestens eines beliebigen Dichtelements, das zwischen dem Verschlusselement und dem Gehäuse angeordnet ist, um so die Öffnung in der Kammer abdichtend zu verschließen. Neben der abdichtenden Funktion kann das Dichtelement auch weitere Funktionen haben. Beispielsweise kann vorgesehen sein, dass das Dichtelement in dem montierten Zustand des Verschlusselements derart in Fügerichtung vorgespannt ist, dass eine zumindest in Fügerichtung im Wesentlichen spielfreie Kopplung des Verschlusselements mit dem Gehäuse erreicht wird.

Das Bauelement, das in der in dem Gehäuse gebildeten Kammer angeordnet ist, kann beispielsweise ein Ventilelement, ein Filterelement, ein Drosselelement oder ein anderweitiges pneumatisches Bauelement sein. Dabei kann in der Kammer lediglich eines der genannten Bauelemente angeordnet sein. Es können jedoch auch mehrere Bauelemente in der Kammer vorgesehen sein. Dafür, wie sich das Bauelement in der Kammer gegenüber dem Gehäuse abstützt, gibt es vielfältige Möglichkeiten. Beispielsweise kann das Bauelement über eine Klebverbindung oder eine Rast- oder Sperrverbindung in der Kammer fixiert sein. Weiterhin ist es möglich, dass das Bauelement beweglich in der Kammer angeordnet ist. Z. B. kann sich das Bauelement über ein Federelement elastisch an dem Gehäuse und/oder an dem mit dem Gehäuse verbundenen Verschlusselement abstützen. Vorzugsweise ist die Öffnung der Kammer derart ausgebildet, dass das Bauelement über die Öffnung in die Kammer eingesetzt werden kann. So kann das Bauelement auf besonderes einfache Weise in die Kammer eingesetzt oder z. B. zu Wartungszwecken oder zum Austausch des Bauelements wieder demontiert werden.

Wenn das Bauelement ein Filterelement ist, kann dies beispielsweise dazu eingesetzt sein, um Verunreinigungen in der in die Kammer eintretenden Druckluft abzufangen. Beispielsweise kann es sich bei dem Filterelement um einen in der Kammer angeordneten Filterkorb oder - käfig handeln. Das Filterelement kann auch so wie das aus DE 199 31 162 B4 oder das aus DE 102011 002 129 A1 bekannte Filterelement ausgebildet sein.

Gemäß einer Ausführungsform der Erfindung handelt es sich bei dem Bauelement um ein in der Kammer angeordnetes Ventilelement, welches sich über eine Feder an dem Verschlusselement abstützt und durch die von der Feder auf das Ventilelement ausgeübte Federkraft in Richtung seines Ventilsitzes beaufschlagt wird. Die Feder dient gemäß dieser Ausführungsform somit einerseits dazu, das Ventilelement (zumindest mittelbar) gegenüber dem Gehäuse abzustützen. Andererseits dient die Feder dazu, das mit dem Ventilelement und dem Ventilsitz gebildete Ventil in Richtung seiner geschlossenen Stellung zu beaufschlagen.

Für eine besonders einfache Montage und/oder Demontage des Ventilelements kann die Öffnung in der Kammer derart ausgebildet sein, dass das Ventilelement und die Feder und optional weitere Bauelemente wie z. B. ein Filterelement durch die Öffnung in der Kammer in diese eingesetzt und durch Verschließen der Öffnung mit dem Verschlusselement in dieser gesichert werden können. Ist die Feder vorgespannt, wenn die Öffnung mit dem Verschlusselement verschlossen wird, kann gewährleistet werden, dass das Ventilelement in Richtung seines Ventilsitzes und damit in Richtung einer Schließstellung beaufschlagt wird.

Der Ventilsitz, in dessen Richtung das Ventilelement beaufschlagt ist, kann beispielsweise von einem weiteren in der Kammer angeordneten Bauelement ausgebildet sein. Dieses Bauelement kann dabei ebenfalls durch die Öffnung in die Kammer eingesetzt sein. Weiterhin ist es möglich, dass der Ventilsitz von einem in die Kammer hineinragenden Absatz des Gehäuses ausgebildet ist. Gemäß einer Ausführungsform der Erfindung ist der Ventilsitz von einer die Kammer in Richtung ihrer Längsachse begrenzenden Wandung des Gehäuses ausgebildet.

Gemäß einer erfindungsgemäßen Ausführungsform handelt es sich bei dem in der Kammer angeordnete Bauelement um ein Ventilelement, das Teil eines Ventils ist, welches durch Kupplung des Kupplungskopfes mit einem Gegenkupplungskopf von einer geschlossenen Stellung in seine geöffnete Stellung überführt wird. Durch ein derartiges Ventil kann sichergestellt werden, dass eine fluidische Verbindung eines Anschlusses für den Gegenkupplungskopf mit der Kammer erst dann hergestellt wird, wenn der Gegenkupplungskopf mit dem Kupplungskopf gekoppelt wird. Insbesondere kann so ein Eindringen von Verunreinigungen in die Kammer verhindert werden. Weiterhin kann so verhindert werden, dass Druckluft von einer an die Kammer angeschlossenen fluidischen Leitung über den Anschluss für den Gegenkupplungskopf entweichen kann, solange dieser noch nicht mit dem Kupplungskopf gekoppelt ist.

Konkret kann es sich bei dem Ventilelement gemäß dieser Ausführungsform um ein Ventilelement handeln, das sich (wie bereits beschrieben) über eine Feder an dem Verschlusselement abstützt und durch die von der Feder bewirkte Federkraft in Richtung seines Ventilsitzes beaufschlagt ist. Um das Ventil von seiner geschlossenen in die geöffnete Stellung überführen zu können, kann in weiterer Ausgestaltung ein Betätigungselement vorgesehen sein, mit dessen Betätigung das Ventilelement entgegen der von der Feder auf das Ventilelement ausgeübten Federkraft bewegt werden kann. Mit der Bewegung des Ventilelements wird dieses dann von seinem Ventilsitz gehoben, womit eine fluidische Verbindung zwischen dem Kupplungskopf und dem Gegenkupplungskopf hergestellt ist. Bei dem Betätigungselement kann es sich beispielsweise um eine Art Betätigungsknopf oder eine Ringdichtung handeln, der oder die durch die Kupplung des Kupplungskopfes mit dem Gegenkupplungskopf in seine betätigte Stellung überführt wird. Beispielsweise kann dazu bei der Kupplung eine Betätigungsfläche einer Ringdichtung des Gegenkupplungskopfes mit einer Betätigungsfläche des Betätigungselements in Kontakt kommen, wobei über die Betätigungsfläche die nötige Kraft auf das Betätigungselement übertragen wird, um es z. B. entgegen den wirkenden Reibungs- und/oder Federkräften in seine betätigte Stellung zu überführen.

Das Betätigungselement kann beidseitig wirkend mit dem Ventilelement gekoppelt sein. Das Ventil kann so durch Betätigung des Betätigungselements sowohl von seiner geschlossen in seine geöffnete Stellung als auch von seiner geöffneten Stellung in die geschlossene Stellung überführt werden. Dazu kann das Ventilelement auf beliebige Weise mit dem Betätigungselement verbunden sein, z. B. durch über eine Schraubverbindung, eine stoffschlüssige Verbindung oder einen Klebstoff, eine Rast- oder Sperrverbindung o. ä. Eine beidseitig wirkende Kopplung ist jedoch nicht zwingend erforderlich. Vielmehr kann es ausreichend sein, wenn das Betätigungselement nur einseitig wirkend mit dem Ventilelement gekoppelt ist. Dabei kann das Ventil durch Betätigung des Betätigungselements in seine geöffnete Stellung überführt werden, während die Rückstellung des Ventils in die geschlossene Stellung und die Rückstellung des Betätigungselements in seine unbetätigte Stellung durch eine Feder, z. B. durch die von der Feder auf das Ventilelement ausgeübte Federkraft, erreicht wird.

Vorzugsweise ist das Betätigungselement auf einer dem Verschlusselement gegenüberliegenden Seite der Kammer angeordnet. Es sind jedoch auch andere Anordnungen möglich. Beispielsweise kann das Betätigungselement eine Schräg- oder Nockenfläche aufweisen, die einen quer zu der Betätigungsrichtung ausgerichteten Steuerkolben betätigt, der schließlich das Ventilelement entgegen der von der Feder ausgeübten Federkraft in Richtung des Verschlusselements bewegt (insbesondere ähnlich zu der Anordnung gemäß DE 2 037 008 A).

Für ein sicheres Überführen des Ventils in seine geöffnete Stellung ist das Betätigungselement bei dessen Betätigung vorzugsweise über eine Führungsfläche geführt. Insbesondere kann so verhindert werden, dass sich das Betätigungselement beim Kuppeln des Kupplungskopfes mit dem Gegenkupplungskopfes verkantet, womit das Ventilelement u. U. in nicht ausreichendem Maß von seinem Ventilsitz gehoben wird und/oder wodurch sich das Kuppeln schwergängig gestaltet. Konkret kann die Führungsfläche z. B. von einer Innenfläche des Gehäuses gebildet sein, die eine Ausnehmung des Gehäuses, in der das Betätigungselement aufgenommen ist, begrenzt.

Für eine verliersichere Kopplung des Betätigungselements mit dem Gehäuse gibt es vielfältige Möglichkeiten. Beispielsweise kann das Betätigungselement einen Bund aufweisen, über den es in einer Ausnehmung des Gehäuses verankert ist. Weiterhin ist es möglich, dass das Betätigungselement an seinem in die Kammer hineinragenden Ende mit dem Ventilelement verbunden ist und das Betätigungselement über die Verbindung mit dem Ventilelement in der Kammer verankert ist. Gemäß einer besonderen Ausführungsform der Erfindung ist das Betätigungselement über eine spielbehaftete Rast- oder Sperrverbindung mit dem Gehäuse gekoppelt. Dazu kann das Betätigungselement beispielsweise an seinem in die Kammer hineinragenden Endbereich eine Rast- oder Sperrnase aufweisen, welche einen von dem die Kammer begrenzenden Wandung gebildeten Absatz hintergreift. Indem die Rast- oder Sperrverbindung ein Spiel aufweist, ist das Betätigungselement gegenüber dem Gehäuse beweglich. Insbesondere kann durch das Spiel vorgegeben werden, um welchen Weg das Betätigungselement für die Betätigung des Ventilelements gegenüber dem Gehäuse bewegt werden kann.

Vorzugsweise ist eine Bewegung des Betätigungselements in Richtung seiner unbetätigten Stellung durch einen Anschlag begrenzt. Der Anschlag kann hierbei beispielsweise durch einen von dem Gehäuse gebildeten Absatz ausgebildet sein, der von einem Rast- oder Sperrelement oder einem Bund des Betätigungselements hintergriffen wird. Weiterhin kann auch eine Bewegung des Betätigungselements in Richtung seiner betätigten Stellung durch einen Anschlag begrenzt sein.

Wenn die Kammer in Richtung ihrer Längsachse von einer den Ventilsitz ausbildenden Wandung des Gehäuses begrenzt ist, kann für die zumindest einseitige Kopplung des Betätigungselements mit dem Ventilelement eine Ausnehmung in der Kammer vorgesehen sein, die das Betätigungselement aufnimmt. Beispielsweise kann sich das Betätigungselement mit einem hülsen- oder stangenartigen Fortsatz durch die Ausnehmung erstrecken, über den das Ventilelement durch Betätigung des Betätigungselements von seinem Ventilsitz gehoben wird. Dabei kann das Betätigungselement beispielsweise über einen an dem Fortsatz angeformten Bund oder eine an dem Fortsatz angeformte Rast- oder Sperrnase in der Kammer verankert sein.

Gemäß einer anderen Ausführungsform ist der Ventilsitz nicht von einer die Kammer begrenzenden Wandung des Gehäuses ausgebildet, sondern von einem Trennelement, das in einer Durchgangsausnehmung des Gehäuses des Kupplungskopfes angeordnet oder ausgebildet ist und die Durchgangsausnehmung in einen Bereich für ein/das Betätigungselement und in einen die Kammer ausbildenden Bereich unterteilt.

In weiterer Ausgestaltung dieser Ausführungsform werden das Betätigungselement, das Trennelement, das Ventilelement, die Feder und optional ein/das Filterelement oder weitere Bauelemente durch eine Öffnung der Durchgangsausnehmung, die die durch das Verschlusselement verschließbare Öffnung der Kammer bildet, in die Durchgansausnehmung eingesetzt und durch Verschließen der Öffnung mit dem Verschlusselement in der Durchgangsausnehmung gesichert. So ist es auf besonders einfache Weise möglich, den Kupplungskopf zu montieren und/oder z. B. zu Wartungszwecken zu demontieren.

Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Dichtelement oder Bauelement die Rede ist, ist dies so zu verstehen, dass genau ein Dichtelement oder Bauelement, zwei Dichtelemente oder Bauelemente oder mehr Dichtelemente oder Bauelemente vorhanden sind. Diese Merkmale können durch andere Merkmale ergänzt werden oder die einzigen Merkmale sein, aus denen das jeweilige Erzeugnis besteht.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt einen Teillängsschnitt durch eine erste Ausführungsform eines Kupplungskopfes, bei dem ein Kopplungselement einer fluidischen Leitung über eine Rast- oder Sperrverbindung mit einem Gehäuse des Kupplungskopfes gekoppelt ist.
- **Fig. 2**: zeigt einen Teillängsschnitt durch eine weitere Ausführungsform eines Kupplungskopfes, bei dem ein Kopplungselement einer fluidischen Leitung über eine Rast- oder Sperrverbindung mit einem Gehäuse des Kupplungskopfes gekoppelt ist.
- **Fig. 3**: zeigt ein Detail III des Kupplungskopfes gemäß Fig. 2.
- **Fig. 4**: zeigt einen Teillängsschnitt durch einen Kupplungskopf, der an einem Tragelement des Zugfahrzeugs oder Anhängers montiert ist.
- **Fig. 5 u. 6**: zeigen Teillängsschnitte durch eine weitere Ausführungsform eines Kupplungskopfes, bei denen eine Öffnung in einer Kammer in einem Gehäuse des Kupplungskopfes mit einem Verschlusselement verschlossen ist.
- **Fig. 7**: zeigt ein Detail eines Kupplungskopfes gemäß Fig. 6 bei Blickrichtung von unten in Fig. 6.
- **Fig. 8 u. 9**: zeigen Einzelansichten des Gehäuses und des Verschlusselements gemäß dem Detail in Fig. 7.
- **Fig. 10**: zeigt einen Teillängsschnitt durch eine weitere Ausführungsform eines Kupplungskopfes, bei dem ein Kopplungselement einer fluidischen Leitung über eine Rast- oder Sperrverbindung mit einem Gehäuse des Kupplungskopfes gekoppelt ist.
- **Fig. 11 u. 12**: zeigen jeweils einen Teillängsschnitt durch eine weitere Ausführungsform eines Kupplungskopfes, bei dem ein Kopplungselement einer fluidischen Leitung über eine Rast- oder Sperrverbindung mit einem Gehäuse des Kupplungskopfes koppelbar ist, wobei Fig. 11 den gekoppelten Zustand und Fig. 12 den ungekoppelten Zustand zeigt.

### FIGURENBESCHREIBUNG

Der erfindungsgemäße Kupplungskopf 1 kann für eine beliebige pneumatische Kupplung eingesetzt werden, insbesondere zur Verbindung einer Vorratsleitung oder einer Bremssteuerleitung eines Zugfahrzeugs mit einer Druckluftbremsanlage eines Anhängers. Durchaus möglich ist, dass zusätzlich zu den im Folgenden offenbarten Merkmalen weitere Bauelemente und technische Funktionen in den Kupplungskopf integriert sind, beispielsweise Filterelemente, wie sie aus DE 199 31 162 B4 oder DE 10 2011 002 129 A1 bekannt sind, Drosselelemente o. ä. Bei dem erfindungsgemäßen Kupplungskopf 1 kann es sich um den anhängerseitigen Kupplungskopf und/oder der zugfahrzeugseitigen Kupplungskopf handeln.

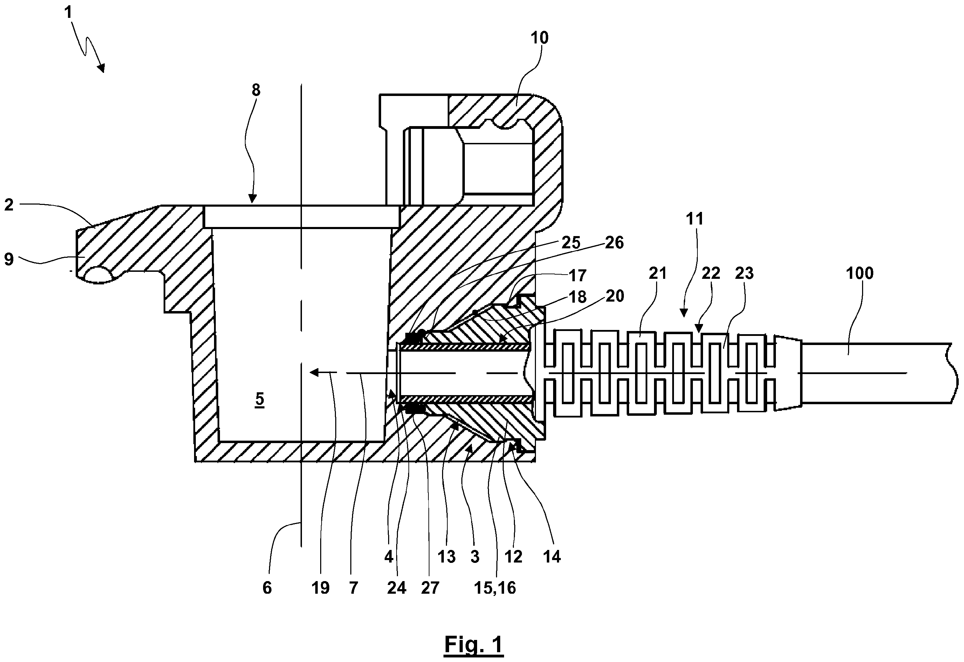

Der Kupplungskopf 1 gemäß **Fig. 1** besitzt ein Gehäuse 2, welches einen Anschlussbereich 3, einen geradlinigen Leitungsbereich 4 und eine Kammer 5 aufweist, welche eine Längsachse 6 besitzt, die quer zur Längssache 7 des Anschlussbereichs 3 und dem Leitungsbereich 4 orientiert ist. Der Leitungsbereich 4 mündet seitlich in die Kammer 5. Für das in Fig. 1 dargestellte Ausführungsbeispiel weist die Kammer 5 eine kegelstumpfförmige Geometrie auf und besitzt lediglich nach oben und in Richtung der Längsachse 6 eine Öffnung 8. Weiterhin weist das Gehäuse ein Verbindungsteil 9 sowie ein Gegenverbindungsteil 10 auf, über die der Kupplungskopf 1 mit einem in Fig. 1 nicht dargestellten Gegenkupplungskopf bajonettartig verbunden werden kann. Vorzugsweise ist das Gehäuse 2 als Gussteil ausgebildet, z. B. als Spritzgussteil aus einem Kunststoff wie Polyamid.

Im Anschlussbereich 3 des Gehäuses 2 ist eine fluidische Leitung 11, die mit einem endseitigen Kopplungselement 12 und einem fluidischen Leitungsteil 100 gebildet ist, über das Kopplungselement 12 an den Kupplungskopf 1 angeschlossen und über den Leitungsbereich 4 fluidisch mit der Kammer 5 verbunden. Das Kopplungselement 12 der fluidischen Leitung 11 ist in einer in dem Gehäuse 2 gebildeten, den Anschluss 13 für die fluidische Leitung 11 ausbildenden Anschlussausnehmung aufgenommen und über eine Rast- oder Sperrverbindung 14 mit dem Gehäuse 2 gekoppelt. Zur Ausbildung der Rast- oder Sperrverbindung 14 weist das Kopplungselement 12 bei der in Fig. 1 dargestellten Ausführungsform ein integral mit dem Kopplungselement 12 ausgebildetes Rast- oder Sperrelement 15 in Form einer Rast- oder Sperrnase 16 auf, die am Außenumfang des Kopplungselements 12 gebildet ist. Hierbei kann sich die Rast- oder Sperrnase 16 nur in einem Teilumfangsbereich erstrecken, wobei in diesem Fall auch mehrere Rast- oder Sperrnasen 16 in Umfangrichtung verteilt angeordnet sein können, oder die Rast- oder Sperrnase kann in Umfangrichtung umlaufend ausgebildet sein.

Zur Ausbildung der Rast- oder Sperrverbindung 14 hintergreift das Rast- oder Sperrelement 16 einen Absatz 17, der von einer Innenfläche 18 des Gehäuses 2 ausgebildet ist, mit der der Anschluss 13 begrenzt ist. Wie in Fig. 1 gezeigt, sind die Kontaktflächen zwischen dem Rast- oder Sperrelement 16 und dem Absatz 17 nicht quer, aber geneigt zu einer Fügerichtung 19 des Kopplungselements 12 mit dem Gehäuse 2 orientiert. So kann erreicht werden, dass die Rast- oder Sperrverbindung 14 des Kopplungselements 12 mit dem Gehäuse 2 durch Aufbringung von Lösekräften gelöst werden kann, ohne dass es hierdurch zu einer Beschädigung oder Zerstörung des Rast- oder Sperrelements 15 und/oder des Absatzes 17 kommt. Für eine dauerhafte Verbindung, die nur unter Zerstörung des Rast- oder Sperrelements 15 oder des Absatzes 17 wieder gelöst werden kann, kann aber auch - anders als in Fig. 1 dargestellt - vorgesehen sein, dass die Anlageflächen quer zur Fügerichtung 19 orientiert sind. Weiterhin kann das Lösen der Rast- oder Sperrverbindung 14 dadurch erschwert werden, dass z. B. eine Erstreckung eines Abschnitts des Rast- oder Sperrelements 15, mit dem es den Absatz 17 hintergreift, in einer Richtung quer zur Fügerichtung 19 vergrößert ist.

Zur Verbindung des Kopplungselements 12 mit dem fluidischen Leitungsteil 100 weist das Kopplungselement 12 eine sich koaxial zu der Längsachse 7 erstreckende Durchgangsausnehmung 20 für das fluidische Leitungsteil 100 auf. Die Verbindung des fluidischen Leitungsteils 100 mit dem Kopplungselement 12 kann dabei z. B. durch Verkleben, Verschweißen, Anspritzen oder formschlüssiges Verbinden des fluidischen Leitungsteils 100 mit dem Kopplungselement 12 im Bereich der Durchgangsausnehmung 20 erreicht werden. Bei dem fluidischen Leitungsteil 100 kann es sich beispielsweise um ein Rohr oder einen Schlauch handeln.

Um das fluidische Leitungsteil 100 gegenüber einem Abknicken im Bereich im Bereich der Verbindung des Leitungsteils 100 mit dem Kopplungselement 12 zu schützen, ist eine Verstärkungshülse 21 vorgesehen, die bei dem in Fig. 1 dargestellten Ausführungsbeispiel einstückig mit dem Kopplungselement 12 ausgebildet ist. Um die Verstärkungshülse 21 biegsam auszugestalten, ist die Verstärkungshülse 21 mit Schlitzen 22 versehen, die sich in Umfangsrichtung zumindest über einen Teil des Umfangs der Verstärkungshülse 21 erstrecken, wobei benachbarte Schlitze 22 jeweils durch Stege 23 der Verstärkungshülse 21 voneinander getrennt sind.

Bei dem in Fig. 1 gezeigten Ausführungsbeispiel erstreckt sich das fluidische Leitungsteil 100 durch die Verstärkungshülse 21 und die Durchgangsausnehmung 20 in dem Kopplungselement 12 und ragt aus dem Kopplungselement 12 heraus in eine Ausnehmung 24 in dem Gehäuse 2 für die Aufnahme des Endbereichs des fluidischen Leitungsteils 100 hinein. Dabei ist in der Ausnehmung 24 ein Dichtelement 25 vorgesehen, das radial innenliegend dichtend an dem in die Ausnehmung 24 hineinragenden Endbereich des fluidischen Leitungsteils 100 anliegt und/oder radial außenliegend dichtend an der die Ausnehmung 24 begrenzenden Innenfläche 26 des Gehäuses 2 anliegt. So kann eine dichte Verbindung des fluidischen Leitungsteils 100 mit dem Gehäuse 2 erreicht werden. Zumindest mittelbar führt dies auch zu einer dichten Verbindung des Kopplungselements 12 mit dem Gehäuse 2.

Vorzugsweise liegt das Dichtelement 25 unter elastischer Vorspannung in Fügerichtung 19 an einer Stirnfläche 27 des Kopplungselements 12 an, so dass das Kopplungselement 12 im gekoppelten Zustand zumindest in Fügerichtung 19 gegenüber dem Gehäuse 2 lagefixiert ist. Durch die elastische Vorspannung kann alternativ oder kumulativ zu der zuvor erläuterten Dichtwirkung eine Abdichtung zwischen dem Gehäuse 2 und dem Kopplungselement 12 erfolgen. Durch eine Vorspannung des Dichtelements 25 kann auch ein etwaiges Spiel der Rast- oder Sperrverbindung 14 in Fügerichtung 19 reduziert oder beseitigt werden.

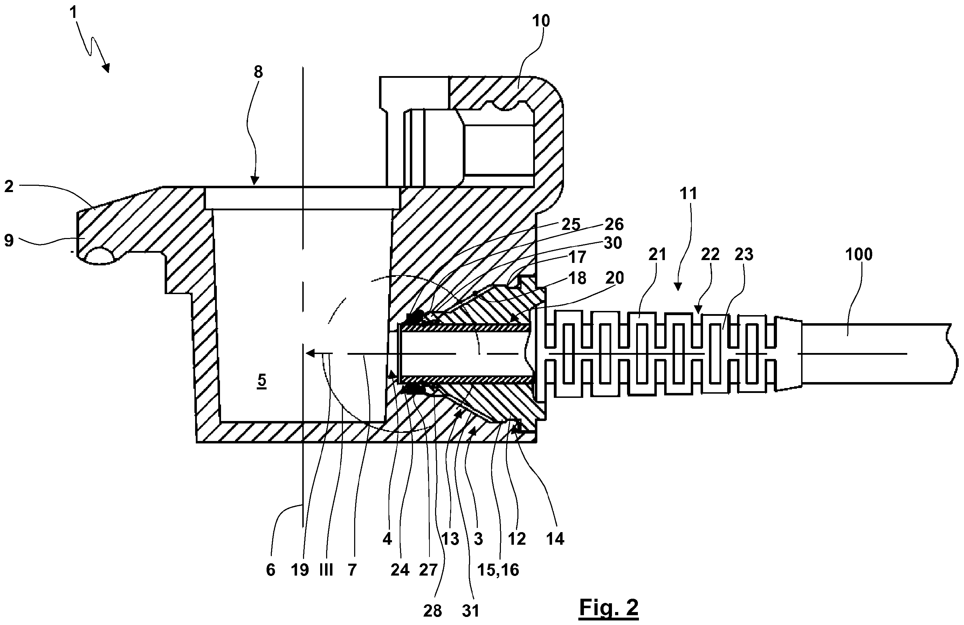

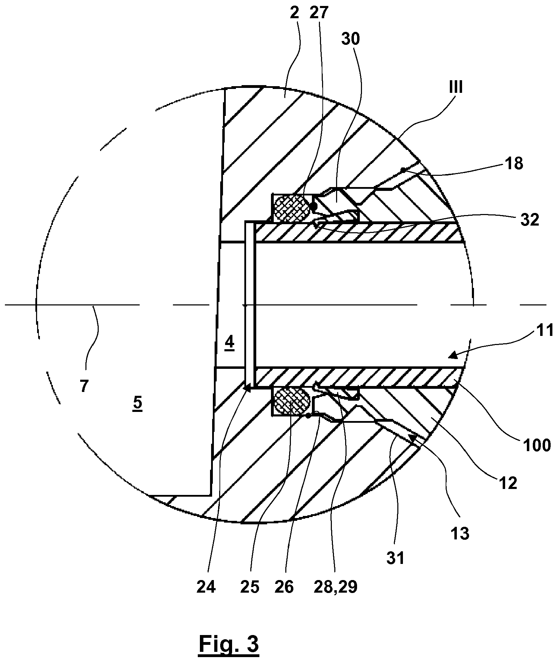

Die in **Fig. 2** gezeigte Ausführungsform des Kupplungskopfes 1 entspricht grundsätzlich der in Fig. 1 gezeigten Ausführungsform, wobei jedoch die Verbindung des Kopplungselements 12 mit dem fluidischen Leitungsteil 100 anders ausgestaltet ist als bei dem in Fig. 1 gezeigten Ausführungsbeispiel: Bei dem in Fig. 2 gezeigten Ausführungsbeispiel wird die Verbindung des fluidischen Leitungsteils 100 mit dem Kopplungselement 12 zumindest nicht allein über eine stoffschlüssige Verbindung, z. B. durch Verkleben des fluidischen Leitungsteils 100 mit dem Kopplungselement 12 im Bereich der Durchgangsausnehmung 20, erreicht. Vielmehr erfolgt die Verbindung zumindest auch über eine kraftschlüssige und/oder formschlüssige Verbindung. Dazu ist an dem in den Anschluss 13 hineinragenden Ende des Kopplungselements 12 ein Klemm- und Schneidelement 28 vorgesehen, wie insbesondere aus dem in **Fig. 3** gezeigten Detail III ersichtlich ist. Das Klemm- und Schneidelement 28 weist einen Schneidring 29 auf, der zwischen dem fluidischen Leitungsteil 100 und endseitig an dem Kopplungselement 12 angeformten Federarmen 30 angeordnet ist. Beim Fügen des Kopplungselements 12 mit dem Gehäuse 2 können für einen ersten Fügebewegungsbereich die Federarme 12 ohne Kontakt mit der Innenfläche 18 gegenüber dem Gehäuse 2 bewegt werden. Mit Annäherung an die in Fig. 3 dargestellten Fügestellung in einem zweiten Fügebewegungsbereich treten die Federarme 30 mit der den Anschluss 13 begrenzenden Innenfläche 18 des Gehäuses 2 derart in Wechselwirkung, dass die Federarme 30 in Richtung des fluidischen Leitungsteils 100 beaufschlagt werden. Dazu weist der Anschluss 13 einen Abschnitt auf, in dem der Anschluss 13 von einer sich in Fügerichtung 19 verjüngenden Fase 31 begrenzt ist, wobei an die Fase 31 ein Abschnitt mit einem reduzierten Durchmesser anschließt. Die Federarme 30 treten zunächst mit der Fase 31 in Wechselwirkung und werden mit der Bewegung in Fügerichtung 19 zunehmend radial nach innen in Richtung des fluidischen Leitungsteils 100 bewegt. Dabei beaufschlagen die Federarme 30 den Schneidring 29 derart, dass dieser ebenfalls in radialer Richtung in Richtung der Mantelfläche des fluidischen Leitungsteils 100 bewegt wird. Mit der Bewegung des Schneidrings 29 wird das fluidische Leitungsteil 100 einerseits von dem Schneidring 29 und den Federarmen 30 eingeklemmt, d. h. es wird eine kraftschlüssige Verbindung erreicht. Andererseits schneidet sich der Schneidring 29 mit seiner Schneidkante 32 in das fluidische Leitungsteil 100 ein, womit auch eine formschlüssige Verbindung erreicht wird. Der Schneidring 29 kann eine in Umfangrichtung umlaufende Schneidkante 32 oder mehrere über den Umfang verteilte Schneidkanten 32 besitzen. Möglich ist auch, dass mehrere über den Umfang verteilte diskrete Schneidelemente verwendet werden.

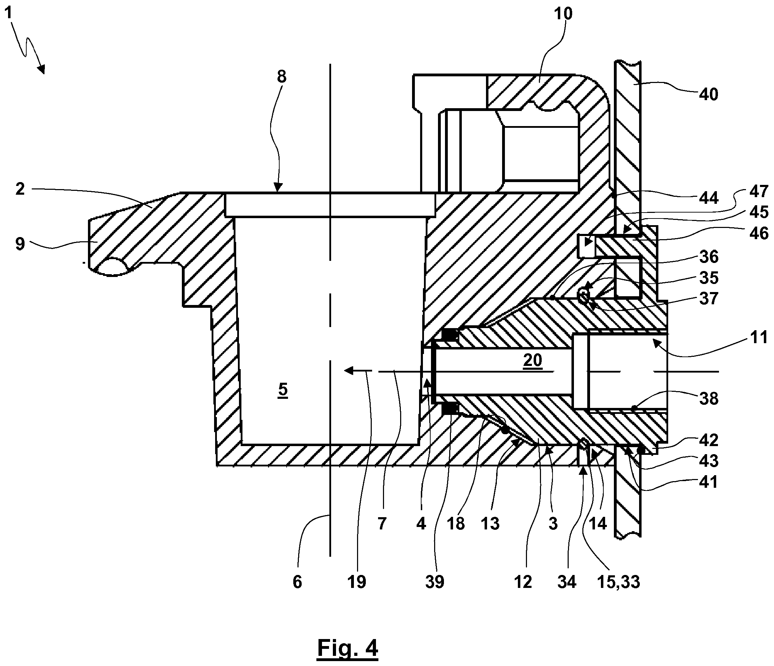

Bei der in **Fig. 4** gezeigten Ausführungsform des Kupplungskopfes 1 ist die Rast- oder Sperrverbindung 14 des Kopplungselements 12 mit dem Gehäuse 2 nicht wie in Fig. 1 und 2 mit einem Rast- oder Sperrelement 15 und einem Absatz 17 ausgebildet, die integral mit dem Kopplungselement 12 und dem Gehäuse 2 ausgebildet sind. Vielmehr ist das Rast- oder Sperrelement 15 bei dem in Fig. 4 gezeigten Ausführungsbeispiel ein Sicherungsring 33, der durch seitliche Öffnung 34 des Gehäuses 2 in eine in Umfangsrichtung um die Längsachse 7 verlaufende Sicherungsnut 35 des Gehäuses 2 eingesetzt ist. Zur Kopplung des Kopplungselements 12 mit dem Gehäuse 2 wird das Kopplungselement 12 in Fügerichtung 19 in den Anschluss 13 eingesteckt. Beim Fügen des Kopplungselements 12 mit dem Gehäuse 2 tritt der bereits in das Gehäuse 2 eingesetzte Sicherungsring 33 mit einer konischen Außenfläche 36 des Kopplungselements 12 derart in Wechselwirkung, dass der Sicherungsring 33 aufgeweitet wird und beim weiteren Fügen schließlich in eine am Außenumfang des Kopplungselements 12 gebildete, die Sicherungsnut 35 bildende Vertiefung 37 einschnappt, womit die Rast- oder Sperrverbindung 14 hergestellt ist. Bei dem Sicherungsring 33 kann es sich beispielsweise um einen Gummiring oder um einen geschlitzten Ring aus Metall oder Kunststoff handeln.

Weiterhin unterscheidet sich die in Fig. 4 dargestellte Ausführungsform von der in den Fig. 1 und 2 dargestellten Ausführungsformen in der Ausgestaltung der Verbindung des fluidischen Leitungsteils 100 mit dem Kopplungselement 12: Bei der in Fig. 4 dargestellten Ausführungsform ist das Kopplungselement 12 in dem der Kammer 5 abgewandten Endbereich mit einem Innengewinde 38 ausgestattet. In das Innengewinde 38 kann beispielsweise ein in Fig. 4 nicht dargestelltes Anschlussteil, das mit einem nicht dargestellten fluidischen Leitungsteil verbunden ist und an seinem Außenumfang mit einem dem Innengewinde entsprechenden Außengewinde ausgestattet ist, eingeschraubt werden, womit die fluidische Leitung über eine Schraubverbindung mit dem Kopplungselement 12 verbunden ist.

Zur Abdichtung des Kopplungselements 12 gegenüber dem Gehäuse 2 ist gemäß Fig. 4 in dem Anschluss 13 ein Dichtelement 39 angeordnet, das radial zwischen der Außenfläche 36 des Kopplungselements 12 und der den Anschluss 13 begrenzenden Innenfläche 18 verspannt ist. Eine Abdichtung des fluidischen Leitungsteils gegenüber dem Kopplungselement 12 kann über ein in Fig. 4 nicht dargestelltes Dichtelement oder eine im Bereich der Gewinde angeordnete Dichtmasse erfolgen.

Der in Fig. 4 gezeigte Kupplungskopf 1 ist derart ausgebildet, dass er auf besonders einfache Weise an einem Tragelement 40 eines Zugfahrzeugs oder eines Anhängers montiert werden kann. In dem in Fig. 4 gezeigten montierten Zustand erstreckt sich das Kopplungselement 12 mit seinem in Richtung des Gehäuses 2 weisenden Ende durch eine Montageausnehmung 41 in dem Tragelement 40. Das Kopplungselement 12 liegt mit einer von einem endseitig angeformten Flansch 42 ausgebildeten Anlagefläche 43 auf der dem Gehäuse 2 gegenüberliegenden Seite des Tragelements 40 an dem Tragelement 40 an. Auf der anderen Seite des Tragelements 40 liegt das Gehäuse 2 mit einer Anlagefläche 44 an dem Tragelement 40 an. Anders ausgedrückt ist das Tragelement 40 zwischen dem Kopplungselement 12 und dem Gehäuse 2 gefangen, womit der Kupplungskopf 1 an dem Tragelement 40 gehalten ist.

Um die Lage des Kupplungskopfes 1 gegenüber dem Tragelement 40 insbesondere auch gegenüber einer Drehung um die Längsachse 7 zu fixieren, ist bei dem in Fig. 4 gezeigten Ausführungsbeispiel eine Durchgangsausnehmung 45 in dem Tragelement 40 vorgesehen, durch die sich im montierten Zustand des Kupplungskopfes 1 ein an dem Flansch 42 angeformter Haltevorsprung 46 erstreckt. Möglich ist, dass der Haltevorsprung 46 darüber hinaus in eine in dem Gehäuse 2 vorgesehene Vertiefung 47 hineinragt, womit die Kopplung des Kopplungselements 12 mit dem Gehäuse 2 einerseits und die Montage des Kupplungskopfes 1 an dem Tragelement 40 andererseits gegenüber einer Drehung um die Längsachse 7 gesichert ist. Möglich ist aber auch, dass abweichend zu den zuvor erläuterten Maßnahmen eine Verdrehsicherung des Kopplungselements 12 gegenüber dem Tragelement 40 durch korrespondierende unrund ausgebildete Querschnitte einerseits der Außenfläche des Kopplungselements 12 und andererseits der Montageausnehmung 41 gewährleistet ist.

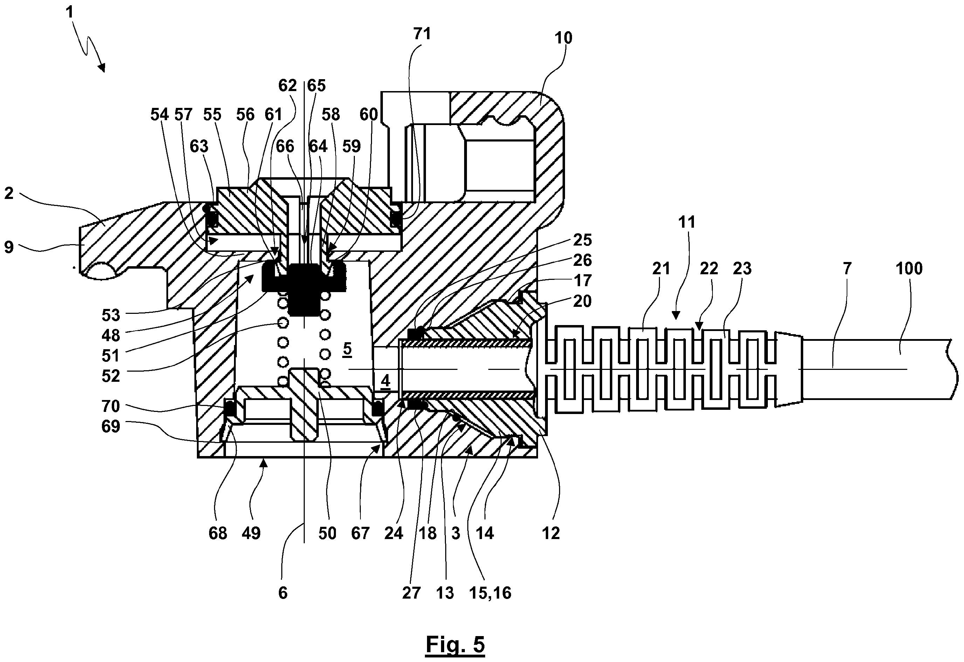

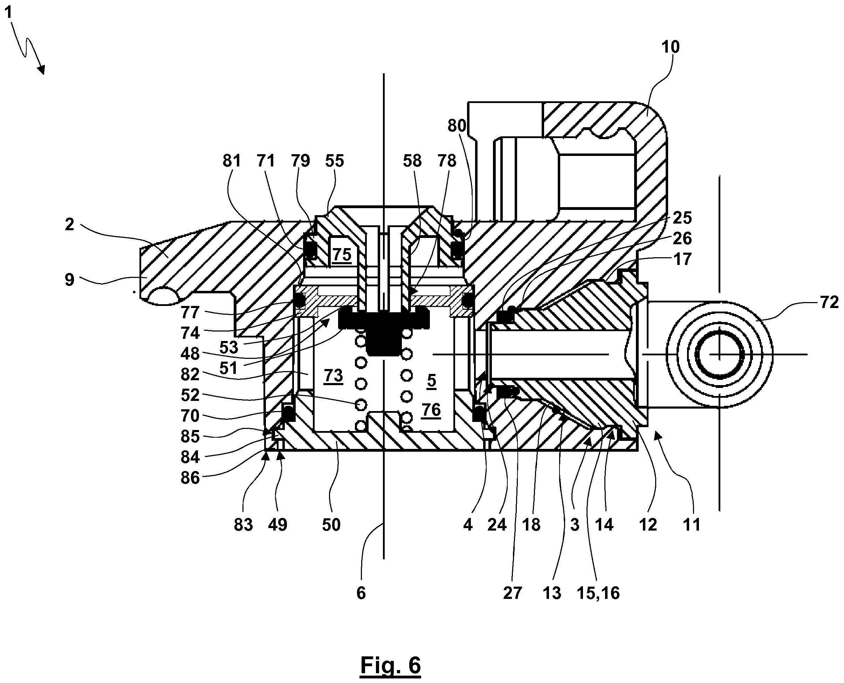

**Fig. 5** **und** **6** betreffen unterschiedliche Ausführungsformen eines Kupplungskopfes 1, bei denen der Kupplungskopf 1 mit einem Ventil 48 ausgestattet ist, das durch Kupplung des Kupplungskopfes 1 mit einem nicht dargestellten Gegenkupplungskopf von einer geschlossenen Stellung in eine geöffnete Stellung überführt wird. Weiterhin unterscheiden sich die in Fig. 5 und 6 gezeigten Ausführungsformen von der in Fig. 1 gezeigten Ausführungsform darin, dass die Kammer 5 im Bereich ihres Bodens nicht von einer Innenfläche des Gehäuses 2 begrenzt ist. Vielmehr weist die Kammer gemäß den in Fig. 5 und 6 gezeigten Ausführungsformen im Bereich ihres Bodens eine Öffnung 49 auf, die durch ein Verschlusselement 50 verschlossen ist.

Bei dem in Fig. 5 gezeigten Ausführungsbeispiel ist das Ventil 48 mit einem Ventilelement 51 ausgebildet, das sich über eine Feder 52 an dem Verschlusselement 50 abstützt und durch die von der Feder 52 auf das Ventilelement 51 ausgeübte Federkraft in Richtung seines Ventilsitzes 53 beaufschlagt ist. Der Ventilsitz 53 ist dabei von einer Wandung 54 des Gehäuses 2 ausgebildet, die die Kammer 5 auf der in Richtung der Längsachse 6 auf der dem Verschlusselement 50 abgewandten Seite begrenzt.

Um das Ventilelement 51 von seinem Ventilsitz 53 heben und somit das Ventil 48 in seine geöffnete Stellung überführen zu können, ist ein Betätigungselement 55 vorgesehen, mit dessen Betätigung das Ventilelement 51 entgegen der von der Feder 52 ausgeübten Federkraft von seinem Ventilsitz 53 gehoben werden kann. Ein Grundkörper 56 des Betätigungselements 55 ist in einer oberhalb der Wandung 54 angeordneten Ausnehmung 57 in dem Gehäuse 2 angeordnet. An den Grundkörper 56 ist ein hülsenartiger Fortsatz 58 angeformt, der sich durch eine Ausnehmung 59 in der Wandung 54 erstreckt und in die Kammer 5 hineinragt. Dabei ist endseitig eine vorzugsweise umlaufende Rast- oder Sperrnase 60 an den Fortsatz 58 angeformt, die einen von der Wandung 54 ausgebildeten Absatz 61 hintergreift. Die Rast- oder Sperrnase 60 und der Absatz 61 bilden eine Rast- oder Sperrverbindung 62 aus, über die das Betätigungselement 55 in Richtung der Längsachse 6 mit dem Gehäuse 2 gekoppelt ist. Indem eine Längserstreckung des Fortsatzes 58 in Richtung der Längsachse 6 größer ist als eine Längserstreckung der Wandung 54, ist die Rast- oder Sperrverbindung 62 mit einem Spiel behaftet. Insbesondere ist so gewährleistet, dass das Betätigungselement 55 in begrenztem Umfang in Richtung der Längsachse 6 gegenüber dem Gehäuse 2 bewegt werden kann. Vorzugsweise ist dabei eine Bewegung des Betätigungselements 55 geführt. Beispielsweise kann eine Bewegung des Betätigungselements 55 über eine Innenfläche 63 des Gehäuses 2 geführt sein, die die Ausnehmung 57 für das Betätigungselement 55 begrenzt.

In Bezug auf die Kopplung des Betätigungselements 55 mit dem Ventilelement 51 kann es ausreichend sein, wenn das Betätigungselement 55 einseitig wirkend mit dem Ventilelement 51 gekoppelt ist. Für ein besonders sicheres Öffnen und Schließen des Ventils 48 kann es jedoch vorteilhaft sein, wenn das Betätigungselement 55 beidseitig wirkend mit dem Ventilelement 51 gekoppelt ist. Dazu weist das Ventilelement 51 bei dem in Fig. 5 gezeigten Ausführungsbeispiel einen sich in Längsrichtung 6 erstreckenden Verbindungsabschnitt 64 auf, der in einer Ausnehmung 65 in dem Fortsatz 58 unter Ausbildung einer kraft-, form- und/oder stoffschlüssigen Verbindung aufgenommen ist. Möglich ist, dass das Ventilelement 51 wie dargestellt einen Fortsatz ausbildet, der sich in das Innere des Fortsatzes 58 des Betätigungselements 55 erstreckt und der montierten Stellung eine Einfederung der Rast- oder Sperrnase 60 und damit die Rast- oder Sperrverbindung sperrt. Anders als in Fig. 5 dargestellt kann eine zweiseitig wirkende Kopplung mit dem Ventilelement 51 auch dadurch erreicht werden, dass das Betätigungselement 55 an dem in die Kammer 5 hineinragenden Ende des Fortsatzes 58 über eine Rast- oder Sperrverbindungen mit dem Ventilelement 51 verbunden ist, wodurch das Betätigungselement 55 in der Kammer 5 verankert ist.

Wenn das Ventil 48 durch Betätigung des Betätigungselements 55 in seine geöffnete Stellung überführt wird, kann Druckluft von der fluidischen Leitung 11 durch den Leitungsbereich 4, die Kammer 5 und eine in Fig. 5 nicht dargestellte seitliche Öffnung in dem Fortsatz 58 in die Ausnehmung 65 strömen. Von dort gelangt die Druckluft über einen Leitungsbereich 66 in dem Betätigungselement 55 zu dem Gegenkupplungskopf. Die Druckluft kann auch in umgekehrter Richtung von dem Gegenkupplungskopf zu der fluidischen Leitung 11 strömen (sofern nicht in einem der Kupplungsköpfe oder den zugeordneten Leitungen ein Rückschlagventil angeordnet ist).

Die Montage des Ventilelements 51 und der Feder 52 kann bei dem in Fig. 5 gezeigten Ausführungsbeispiel über die Öffnung 49 in der Kammer 5 erfolgen. Dazu werden das Ventilelement 51 und die Feder 52 durch die Öffnung 49 von unten in die Kammer 5 eingesetzt, wenn diese noch nicht mit dem Verschlusselement 50 verschlossen ist. Dann wird die Öffnung 49 unter Vorspannung der Feder 52 mit dem Verschlusselement 50 verschlossen. Dabei wird durch die Vorspannung der Feder 52 erreicht, dass das Ventilelement 51 in Richtung seines Ventilsitzes 53 beaufschlagt ist. Nach der Montage des Ventilelements 51, der Feder 52 und des Verschlusselements 50 kann das Betätigungselement 55 von oben durch die Ausnehmung 59 gesteckt und mit dem Gehäuse 2 und/oder dem Ventilelement 51 verbunden werden. Ebenfalls möglich ist eine Montage in umgekehrter Reihenfolge. Die Montage des Betätigungselements 55 kann aber auch erfolgen, bevor die Öffnung 49 mit dem Verschlusselement 50 verschlossen ist, wodurch es u. U. einfacher ist, das Betätigungselement 55 mit dem Ventilelement 51 zu verbinden.

Die Montage des Verschlusselements 50 mit dem Gehäuse 2 erfolgt über eine Rast- oder Sperrverbindung 67. Bei dem in Fig. 5 gezeigten Ausführungsbeispiel weist dazu das Verschlusselement 50 ein integral mit dem Verschlusselement 50 ausgebildetes Rast- oder Sperrelement 68 auf, welches sich entgegen der Montagerichtung erstreckt und radial nach innen elastisch verformbar ist. Zur Ausbildung der Rast- oder Sperrverbindung 67 hintergreift das Rast- oder Sperrelement 68 einen integral mit dem Gehäuse 2 ausgebildeten Absatz 69. (Umgekehrt kann für eine nicht dargestellte Ausführungsform aber auch das Rast- oder Sperrelement integral mit dem Gehäuse 2 ausgebildet sein, während der Absatz integral mit dem Verschlusselement 50 ausgebildet ist.)

Um die Öffnung 49 der Kammer 5 abdichtend zu verschließen, ist vorzugsweise ein Dichtelement 70 vorgesehen, das dichtend zwischen dem Verschlusselement 50 und dem Gehäuse 2 anliegt. Dabei kann das Dichtelement 70 unter elastischer Vorspannung in Richtung der Längsachse 6 an einem Absatz des Verschlusselements 50 anliegen, so dass das ein etwaiges Spiel der Rast- oder Sperrverbindung 67 reduziert oder beseitigt ist.

Weiterhin kann auch ein Dichtelement 71 zur abdichtenden Verbindung des Betätigungselements 55 mit dem Gehäuse 2 vorgesehen sein.

Die in **Fig. 6** gezeigte Ausführungsform unterscheidet sich von der in Fig. 5 gezeigten Ausführungsform zum einem darin, dass das Kopplungselement 12 einen abgewinkelten Abschnitt 72 aufweist, über den das fluidische Leitungsteil 100 mit dem Kopplungselement 12 verbunden werden kann.

Zum anderen ist bei der in Fig. 6 gezeigten Ausführungsform nicht vorgesehen, dass das Betätigungselement 55 einerseits und das Ventilelement 51, die Feder 52 und das Verschlusselement 50 anderseits von verschiedenen Seiten der Wandung 54 mit dem Gehäuse 2 montiert werden. Vielmehr weist das Gehäuse 2 bei dem in Fig. 6 gezeigten Ausführungsbeispiel eine abgestufte Durchgangsausnehmung 73 auf, die durch ein in der Durchgangsausnehmung 73 angeordnetes Trennelement 74 in einen Bereich 75 für das Betätigungselement 55 und in einen die Kammer 5 ausbildenden Bereich 76 unterteilt ist. Das Trennelement 74 übernimmt hier somit zumindest teilweise die Funktion der Wandung 54. Die Montage der in der Durchgangsausnehmung 73 angeordneten Teile, d. h. des Betätigungselements 55, des Trennelements 74, des Ventilelements 51, der Feder 52 und des Verschlusselements 50 sowie die Montage von etwaigen Dichtelementen 70, 71, 77 kann dabei von einer Seite, nämlich durch die Öffnung 49 der Kammer 5 erfolgen.

In dem in Fig. 6 gezeigten montierten Zustand erstreckt sich das Betätigungselement 55 mit seinem hülsenartigen Fortsatz 58 durch eine Ausnehmung 78 in dem Trennelement 74 in die Kammer 5 und stützt sich in Betätigungsrichtung über das Ventilelement 51 und die Feder 52 an dem Verschlusselement 50 ab. Dabei wird das Ventilelement 51 durch die von der Feder 52 auf das Ventilelement 51 ausgeübte Federkraft in Richtung in seines von dem Trennelement 74 ausgebildeten Ventilsitzes 53 beaufschlagt. Gleichzeitig wird das Betätigungselement 55 aufgrund der von der Feder 52 auf das Ventilelement 51 ausgeübten Federkraft in Richtung seiner unbetätigten Stellung beaufschlagt, in der das Betätigungselement 55 mit einem Bund 79 an einem von dem Gehäuse 2 gebildeten Anschlag 80 anliegt. Das Trennelement 74 stützt sich einerseits an einem Anschlag 81 des Gehäuses 2 und andererseits über Abstandselemente 82 an dem Verschlusselement 50 ab und ist so in seiner Lage fixiert.

Weiterhin unterscheidet sich das in Fig. 6 gezeigte Ausführungsbeispiel von der in Fig. 5 gezeigten Ausführungsform darin, dass das Verschlusselement 50 über eine Bajonettverbindung 83 mit dem Gehäuse 2 verbunden ist, wobei die Bajonettverbindung 83 über eine Rast- oder Sperrverbindung gegenüber einer Drehung zum Lösen der Bajonettverbindung 83 gesichert ist. Zum Herstellen der Bajonettverbindung 83 wird das Verschlusselement 50 in die Öffnung 49 mit einer Fügebewegung entlang der Längsachse 6 eingesetzt. Durch Drehen des Verschlusselements 50 um die Längsachse 6 greift ein am Außenumfang des Verschlusselements 50 und sich radial nach außen erstreckender Bund 84 in Ausnehmungen 85 in einem sich radial nach innen erstreckenden Gegenbund 86 des Gehäuses 2 ein, womit das Verschlusselement 50 gegenüber einer Bewegung in Richtung der Längsachse 6 an dem Gehäuse 2 gesichert ist.

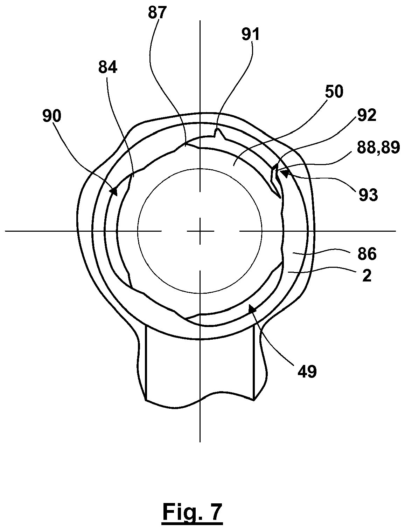

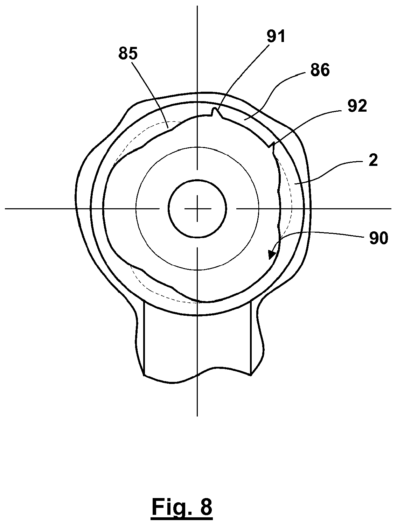

Die konkrete Ausgestaltung der Bajonettverbindung 83 und der Rast- oder Sperrverbindung zur Sicherung der Bajonettverbindung 83 gegenüber einer Drehung zum Lösen der Bajonettverbindung 83 wird anhand der **Fig. 7 bis 9** erläutert, die ein Detail des Kupplungskopfes 1 gemäß Fig. 6 bei Blickrichtung von unten zeigen.

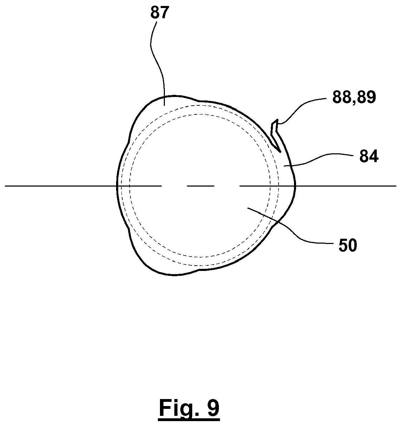

Wie in Fig. 9 gezeigt, ist die Außenkontur des Bunds 84 des Verschlusselements 50 im Wesentlichen kreisförmig mit drei konvexen Wölbungen 87, die in Umfangsrichtung um jeweils 120° zueinander versetzt angeordnet sind. Dabei ist an einer der Wölbungen 87 ein Fortsatz 88 vorgesehen, mit dem ein radial elastisches Rast- oder Sperrelement 89 gebildet ist.

Eine Innenkontur des Gegenbunds 86 des Gehäuses 2 ist im Wesentlichen komplementär zu der Außenkontur des Bunds 84 ausgebildet. Insbesondere weist der Gegenbund 86 eine Innenkontur mit einer kreisförmigen Grundform mit drei in Umfangsrichtung um 120° zueinander versetzt angeordneten konkaven Wölbungen 90 auf. Weiterhin sind in dem Gehäuse 2 die mit gestrichelten Linien angedeuteten Ausnehmungen 85 vorgesehen, die eine Art Tasche bilden, in welche die Wölbungen 87 eingeschwenkt werden, wenn das Verschlusselement 50 zur Herstellung der Bajonettverbindung 83 um die Längsachse 6 gedreht wird. Dabei ist durch die Form der Ausnehmungen 85 ein Anschlag ausgebildet, durch den eine Drehung des Verschlusselements 50 gegenüber dem Gehäuse 2 begrenzt ist. Insbesondere kann bei der Montage eine haptische Rückmeldung erfolgen, wenn das Verschlusselement 50 bereits weit genug gedreht ist für eine sichere Verbindung des Verschlusselements 50 mit dem Gehäuse 2. Weiterhin sind in dem Gegenbund 86 zwei Vertiefungen 91, 92 vorgesehen, die in etwa komplementär zu dem sich radial nach außen erstreckenden Endbereich des Rast- oder Sperrelements 89 ausgebildet sind.

Zum Herstellen der Bajonettverbindung 83 wird das Verschlusselement 50 so relativ zu dem Gehäuse 2 ausgerichtet, dass das Rast- oder Sperrelement 89 in einer Projektion in Fügerichtung des Verschlusselements 50 mit dem Gehäuse 2 mit der Vertiefung 91 überlappt und die Wölbungen 87 im Bereich der Wölbungen 90 angeordnet sind. Das Verschlusselement 50 wird dann so weit in die Öffnung 49 hineingeschoben, dass der Bund 85 in Richtung der Längsachse 6 in Höhe der Ausnehmungen 85 liegt. Dann wird das Verschlusselement 50 um die Längsachse 6 gegenüber dem Gehäuse 2 gedreht. Beim Drehen des Verschlusselements 50 werden die Wölbungen 87 in die Ausnehmungen 85 hineingeschwenkt. Gleichzeitig wird das Rast- oder Sperrelement 89 nach radial innen verformt, bis dieses aus der Vertiefung 91 austreten kann. Mit dem weiteren Drehen des Verschlusselements 50 kommt das Rast- oder Sperrelement 89 schließlich in den Bereich der Vertiefung 92 und schnappt in die Vertiefung 92 ein unter Ausbildung einer Rast- oder Sperrverbindung 93, die die Bajonettverbindung 83 gegenüber einer Drehung zum Lösen der Bajonettverbindung 83 sichert. In dieser Rast- oder Sperrstellung liegt zumindest eine Wölbung 87 an einem von einer Ausnehmung 85 gebildeten Anschlag an.

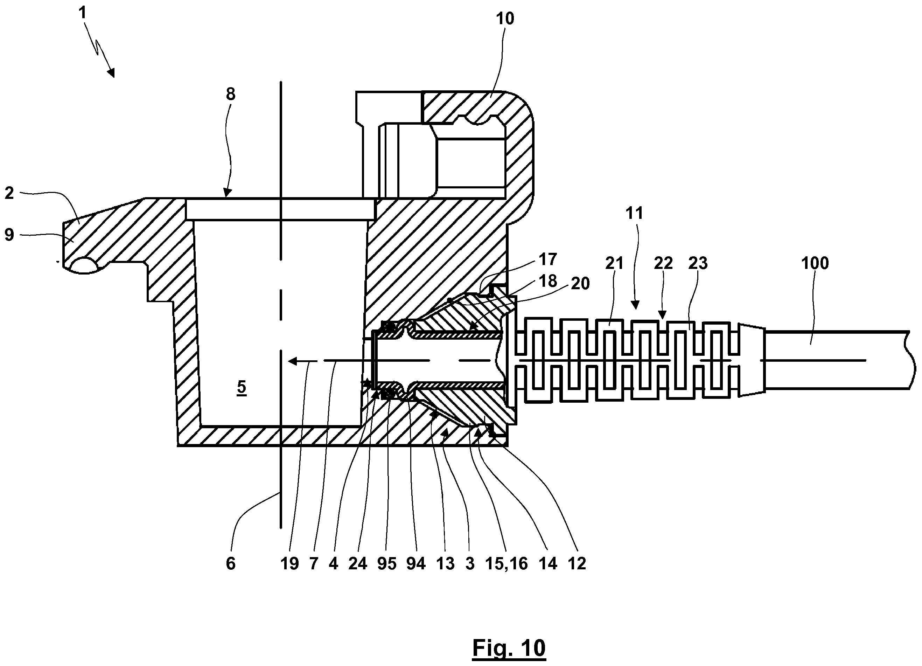

Die in **Fig. 10** gezeigte Ausführungsform des Kupplungskopfes 1 entspricht grundsätzlich der in Fig. 1 gezeigten Ausführungsform, wobei jedoch die Verbindung des Kopplungselements 12 mit dem fluidischen Leitungsteil 100 anders ausgestaltet ist als bei dem in Fig. 1 gezeigten Ausführungsbeispiel: Bei dem in Fig. 10 gezeigten Ausführungsbeispiel wird die Verbindung des fluidischen Leitungsteils 100 mit dem Kopplungselement 12 zumindest nicht allein über eine stoffschlüssige Verbindung, z. B. durch Verkleben des fluidischen Leitungsteils 100 mit dem Kopplungselement 12 im Bereich der Durchgangsausnehmung 20, erreicht. Vielmehr erfolgt die Verbindung zumindest auch über eine formschlüssige Verbindung. Konkret erfolgt die Verbindung über eine plastische Aufweitung des Leitungsteils 100 in dem in die Ausnehmung 24 hineinragenden Endbereich des Leitungsteils 100. Beispielsweise kann die plastische Verformung durch Heißverformung und (bspw. mechanische oder innendruckbeaufschlagte) Aufweitung des Leitungsteils 100 unter Ausbildung eines Wulsts 94 erfolgen. Der Wulst 94 kann dabei lediglich zur Verbindung des Leitungsteils 100 mit dem Kopplungselement 12 dienen. Die Wulst 94 kann jedoch auch eine abdichtende Funktion haben. Wie in Fig. 10 dargestellt, kann zur Abdichtung jedoch auch ein Dichtelement 95 zur Abdichtung der fluidischen Leitung 11 gegenüber dem Gehäuse 2 vorgesehen sein. Möglich ist auch, dass der Wulst 94 stirnseitig an dem Kopplungselement 12 anliegt und ein Herausziehen des Leitungsteils 100 sichert (vgl. Fig. 10). Ebenfalls möglich ist, dass das Kopplungselement 12 eine Innennut aufweist, in welche formschlüssig der Wulst 12 eingreift. Während hier ein in Umfangsrichtung umlaufender Wulst 12 dargestellt ist, ist ebenfalls möglich, dass sich der Wulst 12 oder auch eine Auswölbung nur über mindestens einen Teilumfangsbereich erstreckt.

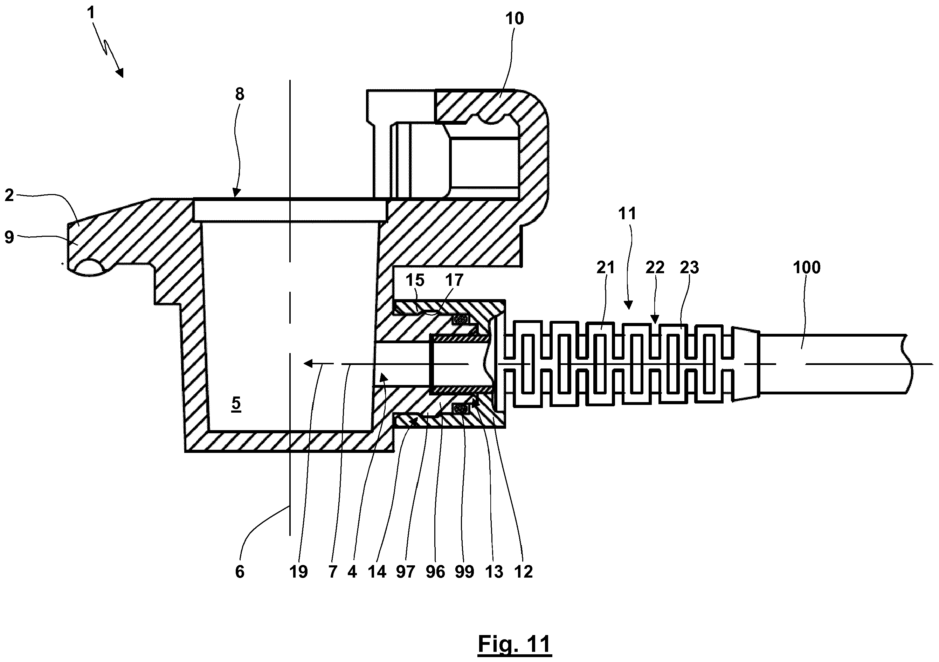

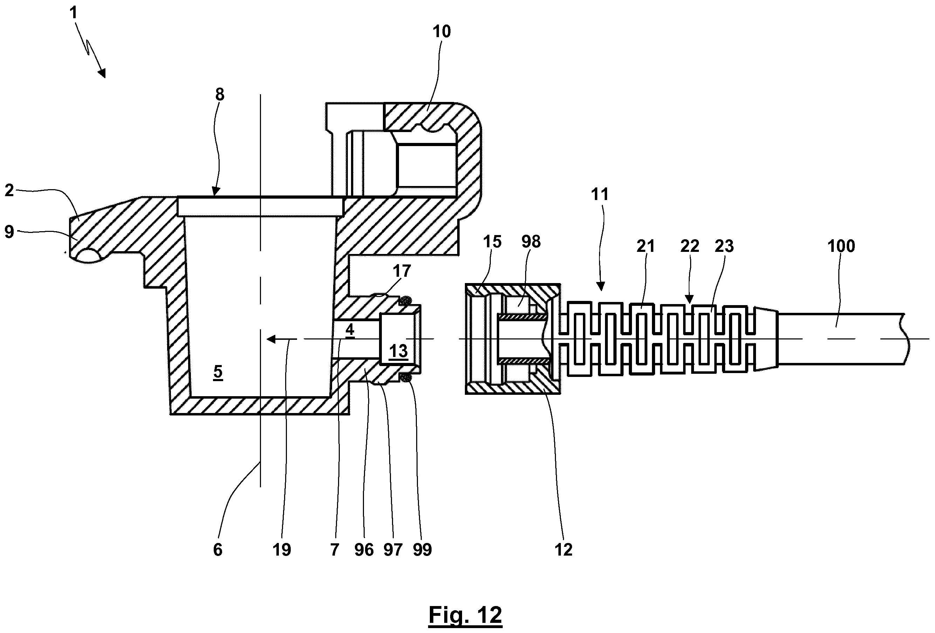

Bei der in **Fig. 11** **und** **12** gezeigten Ausführungsform weist das Gehäuse 2 des Kupplungskopfes 1 als Anschluss für die fluidische Leitung 11 einen Anschlussstutzen 96 auf, über den die fluidische Leitung 11 mittels ihres Kopplungselements 12 an den Kupplungskopf 1 angeschlossen wird. Der Anschlussstutzen 96 ist dabei eine einstückig mit dem Gehäuse 2 ausgebildete Auskragung. An seinem Außenumfang weist der Anschlussstutzen 96 eine sich radial nach außen erstreckende umlaufende Rippe 97 (oder einen nur in mindestens einem Teilumfangsbereich hervortretenden Vorsprung) auf, die den Absatz 17 der Rast- oder Sperrverbindung 14 ausbildet.

Das Kopplungselement 12 ist bei dem in Fig. 11 und 12 gezeigten Ausführungsbeispiel hülsenartig ausgebildet und weist eine Durchgangsausnehmung 98 auf. Dabei erstreckt sich das fluidische Leitungsteil 100 durch die Verstärkungshülse 21 und ragt in die Durchgangsausnehmung 98 des Kopplungselements 12 hinein. Der Durchmesser der Durchgangsausnehmung 98 im kupplungskopfseitigen Endbereich des Kopplungselements 12 ist dabei derart an den Außendurchmesser des Anschlussstutzens 96 angepasst, dass das Kopplungselement 12 auf den Anschlussstutzen 96 aufgesteckt und zumindest ein Teil des Anschlussstutzens 96 in der Durchgangsausnehmung 98 aufgenommen werden kann.

Zum Anschließen der fluidischen Leitung 11 an den Kupplungskopf 1 wird das Kopplungselement 12 in Fügerichtung 19 auf den Anschlussstutzen 96 aufgesteckt. Dabei wird das Rast- oder Sperrelement 15, das in dem kupplungskopfseitigen Endbereich des Kopplungselements 12 ausgebildet ist, nach radial außen verformt und rastet unter Ausbildung der Rast- oder Sperrverbindung 14 hinter dem Absatz 17 ein. Wie in Fig. 11 gezeigt, ragt das fluidische Leitungsteil 100 im gekoppelten Zustand in den von dem Anschlussstutzen 96 begrenzten Anschluss 13 hinein. Zur Abdichtung der Kopplung des Kopplungselements 12 mit dem Gehäuse 2 ist ein Dichtelement 99 vorgesehen, dass dichtend zwischen einer Außenfläche des Anschlussstutzens 96 und einer die Durchgangsausnehmung 98 begrenzenden Innenfläche des Kopplungselements 12 anliegt und axial zwischen einem inneren Bund des Kopplungselements 12 und einem äußeren Bund des Anschlussstutzens 96 gefangen ist. Möglich ist, dass das Kopplungselement 12 und die Verstärkungshülse 21 einstückig ausgebildet sind, ohne dass dieses zwingend der Fall ist.

### BEZUGSZEICHENLISTE

- 1: Kupplungskopf
- 2: Gehäuse
- 3: Anschlussbereich
- 4: Leitungsbereich
- 5: Kammer
- 6: Längsachse
- 7: Längsachse
- 8: Öffnung
- 9: Verbindungsteil
- 10: Gegenverbindungsteil
- 11: Leitung
- 12: Kopplungselement
- 13: Anschluss
- 14: Rast-/Sperrverbindung
- 15: Rast-/Sperrelement
- 16: Rast-/Sperrnase
- 17: Absatz
- 18: Innenfläche
- 19: Fügerichtung
- 20: Durchgangsausnehmung
- 21: Verstärkungshülse
- 22: Schlitz
- 23: Steg
- 24: Ausnehmung
- 25: Dichtelement
- 26: Innenfläche
- 27: Stirnfläche
- 28: Klemm-Schneidelement
- 29: Schneidring
- 30: Federarm
- 31: Fase
- 32: Schneidkante
- 33: Sicherungsring
- 34: Öffnung
- 35: Sicherungsnut
- 36: Außenfläche
- 37: Vertiefung
- 38: Innengewinde
- 39: Dichtelement
- 40: Tragelement
- 41: Montageausnehmung
- 42: Flansch
- 43: Anlagefläche
- 44: Anlagefläche
- 45: Durchgangsausnehmung
- 46: Haltevorsprung
- 47: Vertiefung
- 48: Ventil
- 49: Öffnung
- 50: Verschlusselement
- 51: Ventilelement
- 52: Feder
- 53: Ventilsitz
- 54: Wandung
- 55: Betätigungselement
- 56: Grundkörper
- 57: Ausnehmung
- 58: Fortsatz
- 59: Ausnehmung
- 60: Rast-/Sperrnase
- 61: Absatz
- 62: Rast-/Sperrverbindung
- 63: Innenfläche
- 64: Verbindungsabschnitt
- 65: Ausnehmung
- 66: Leitungsbereich
- 67: Rast-/Sperrverbindung
- 68: Rast-/Sperrelement
- 69: Absatz
- 70: Dichtelement
- 71: Dichtelement
- 72: Abschnitt
- 73: Durchgangsausnehmung
- 74: Trennelement
- 75: Bereich
- 76: Bereich
- 77: Dichtelement
- 78: Ausnehmung
- 79: Bund
- 80: Anschlag
- 81: Absatz
- 82: Abstandelement
- 83: Bajonettverbindung
- 84: Bund
- 85: Ausnehmung
- 86: Gegenbund
- 87: Wölbung
- 88: Fortsatz
- 89: Rast-/Sperrelement
- 90: Wölbung
- 91: Vertiefung
- 92: Vertiefung
- 93: Rast-/Sperrverbindung
- 94: Wulst
- 95: Dichtelement
- 96: Anschlussstutzen
- 97: Rippe
- 98: Durchgangsausnehmung
- 99: Dichtelement
- 100: Leitungsteil

## Patentansprüche

1. Kupplungskopf (1) zur pneumatischen Verbindung eines Zugfahrzeugs und eines Anhängers oder zur pneumatischen Verbindung von zwei Anhängern mit
a) einem Gehäuse (2),
b) einer in dem Gehäuse (2) angeordneten Kammer (5),
c) einem Bauelement, insbesondere ein Filterelement oder ein Ventilelement (51), welches in der Kammer (5) angeordnet ist, und
d) einem Verschlusselement (50), das eine Öffnung (49) der Kammer (5) verschließt,
**dadurch gekennzeichnet, dass**
e) ein Rast- oder Sperrelement (68, 89) und ein Vorsprung oder Absatz (69) integral mit dem Verschlusselement (50) oder dem Gehäuse (2) ausgebildet sind und das Verschlusselement (50) an dem Gehäuse (2) montiert ist unter Ausbildung einer Rast- oder Sperrverbindung (67, 93), bei welcher das Rast- oder Sperrelement (68, 89) des Gehäuses (2) oder des Verschlusselements (50) den Vorsprung oder Absatz (69) des Verschlusselements (50) oder des Gehäuses (2) hintergreift.

2. Kupplungskopf (1) nach Anspruch 1, **dadurch gekennzeichnet, dass**
a) eine Innenfläche des Gehäuses (2), die eine Ausnehmung für das Verschlusselement (50) begrenzt, den Vorsprung oder Absatz (69) aufweist und
b) das Rast- oder Sperrelement (68) ein integral mit dem Verschlusselement (50) ausgebildetes Rast- oder Sperrelement (68) ist.

3. Kupplungskopf (1) nach einem der vorhergehenden Ansprüche, **dadurch gekennzeichnet, dass** das Verschlusselement (50) über eine Bajonettverbindung (83) mit dem Gehäuse (2) montiert ist, wobei die Bajonettverbindung (83) über die Rast- oder Sperrverbindung (93) gegenüber einer Drehung zum Lösen der Bajonettverbindung (83) gesichert ist.

4. Kupplungskopf (1) nach einem der vorhergehenden Ansprüche, **dadurch gekennzeichnet, dass** das Gehäuse (2) und/oder das Verschlusselement (50) aus Kunststoff hergestellt sind/ist.

5. Kupplungskopf (1) nach einem der vorhergehenden Ansprüche, **dadurch gekennzeichnet, dass** ein Dichtelement (70) zwischen dem Verschlusselement (50) und dem Gehäuse (2) angeordnet ist, welches die Kammer (5) abdichtet.

6. Kupplungskopf (1) nach einem der vorhergehenden Ansprüche, **dadurch gekennzeichnet, dass** das Bauelement ein Filterelement ist.

7. Kupplungskopf (1) nach einem der vorhergehenden Ansprüche, **dadurch gekennzeichnet, dass** das Bauelement ein Ventilelement (51) ist, das sich über eine Feder (52) an dem Verschlusselement (50) abstützt und durch die von der Feder (52) ausgeübte Federkraft in Richtung seines Ventilsitzes (53) beaufschlagt ist.

8. Kupplungskopf (1) nach Anspruch 7, **dadurch gekennzeichnet, dass** das Ventilelement (51) und die Feder (52) und/oder ein Filterelement durch die Öffnung (49), die mit dem Verschlusselement (50) verschließbar ist, in die Kammer (5) eingesetzt und durch Verschließen der Öffnung (49) mit dem Verschlusselement (50) in der Kammer (5) gesichert sind/ist.

9. Kupplungskopf (1) nach Anspruch 7 oder 8, **dadurch gekennzeichnet, dass** der Ventilsitz (53) von einer die Kammer (5) in Richtung ihrer Längsachse (6) begrenzenden Wandung (54) des Gehäuses (2) ausgebildet oder getragen ist.

10. Kupplungskopf (1) nach einem der vorhergehenden Ansprüche, **dadurch gekennzeichnet, dass** das in der Kammer (5) angeordnete Bauelement ein Ventilelement (51) ist, mit welchem ein Ventil (48) gebildet ist, wobei das Ventil (48) durch Kupplung des Kupplungskopfes (1) mit einem Gegenkupplungskopf von einer geschlossenen Stellung in eine geöffnete Stellung überführbar ist.

11. Kupplungskopf nach Anspruch 10 in Rückbeziehung auf einen der Ansprüche 7 bis 9, **dadurch gekennzeichnet, dass** ein Betätigungselement (55) vorgesehen ist, mit dessen Betätigung das Ventilelement (51) entgegen der von der Feder (52) auf das Ventilelement (51) ausgeübten Federkraft bewegbar ist.

12. Kupplungskopf nach Anspruch 11, **dadurch gekennzeichnet, dass** das Betätigungselement (55) nur einseitig wirkend mit dem Ventilelement (51) gekoppelt ist.

13. Kupplungskopf (1) nach Anspruch 11 oder 12, **dadurch gekennzeichnet, dass** das Betätigungselement (55) auf einer dem Verschlusselement (50) gegenüberliegenden Seite der Kammer (5) angeordnet ist.

14. Kupplungskopf (1) nach einem der Ansprüche 11 bis 13, **dadurch gekennzeichnet, dass** eine Innenfläche (63) des Gehäuses (2) eine Führungsfläche aufweist, über die eine Bewegung des Betätigungselements (55) bei dessen Betätigung geführt ist.

15. Kupplungskopf nach einem der Ansprüche 11 bis 14, **dadurch gekennzeichnet, dass** das Betätigungselement (55) über eine spielbehaftete Rast- oder Sperrverbindung (62) mit dem Gehäuse (2) gekoppelt ist.

16. Kupplungskopf (1) nach einem der Ansprüche 11 bis 15, **dadurch gekennzeichnet, dass** eine Bewegung des Betätigungselements (55) in Richtung seiner unbetätigten Stellung durch einen Anschlag (80) begrenzt ist.

17. Kupplungskopf (1) nach einem der Ansprüche 11 bis 16 in Rückbeziehung auf Anspruch 9, **dadurch gekennzeichnet, dass** in der Wandung (54) eine Ausnehmung (59) vorgesehen ist, durch welche sich das Betätigungselement (55) erstreckt.

18. Kupplungskopf (1) nach einem der Ansprüche 11 bis 16 in Rückbeziehung auf Anspruch 7 oder 8, **dadurch gekennzeichnet, dass** das Gehäuse (2) des Kupplungskopfes (1) eine Durchgangsausnehmung (73) aufweist, die durch ein in der Durchgangsausnehmung (73) angeordnetes oder ausgebildetes Trennelement (74) in einen Bereich (75) für das Betätigungselement (55) und in einen die Kammer (5) ausbildenden Bereich (76) unterteilt ist.

19. Kupplungskopf (1) nach Anspruch 18, **dadurch gekennzeichnet, dass** das Trennelement (74) den Ventilsitz (53) für das Ventilelement (51) ausbildet.

20. Kupplungskopf (1) nach Anspruch 19, **dadurch gekennzeichnet, dass** das Betätigungselement (55), das Trennelement (74), das Ventilelement (51), die Feder (52) und optional ein Filterelement durch eine Öffnung der Durchgangsausnehmung (73), die die durch das Verschlusselement (50) verschließbare Öffnung (49) der Kammer (5) bildet, in die Durchgangsausnehmung (73) eingesetzt und durch Verschließen der Öffnung (49) mit dem Verschlusselement (50) in der Durchgangsausnehmung (73) gesichert sind.

## Claims

1. Coupling head (1) for pneumatically connecting a tractor and a trailer or for pneumatically connecting two trailers, comprising
a) a housing (2),
b) a chamber (5) arranged in the housing (2),
c) a constructional element, in particular a filter element or a valve element (51), which is arranged in the chamber (5), and
d) a closing element (50) which closes an opening (49) of the chamber (5),
**characterised in that**
e) a latching or locking element (68, 89) and a protrusion or shoulder (69) are formed integrally with the closing element (50) or with the housing (2) and the closing element (50) is assembled with the housing (2) under the establishment of a latching or locking connection (67, 93) wherein the latching or locking element (68, 89) of the housing (2) or the closing element (50) engages behind the protrusion or shoulder (69) of the closing element (50) or of the housing (2).

2. Coupling head (1) of claim 1, **characterised in that**
a) an inner surface of the housing (2), which delimits a recess for the closing element (50) comprises the protrusion or shoulder (69) and
b) the latching or locking element (68) is a latching or locking element (68) which is formed integrally with the closing element (50).

3. Coupling head (1) of one of the preceding claims, **characterised in that** the closing element (50) is assembled by a bayonet connection (83) to the housing (2), the bayonet connection (83) being secured against a rotation for releasing the bayonet connection (83) by a latching or locking connection (93).

4. Coupling head (1) of one of the preceding claims, **characterised in that** the housing (2) and/or the closing element (50) are/is manufactured of plastic.

5. Coupling head (1) of one of the preceding claims, **characterised in that** a sealing element (70) which seals the chamber (5) is arranged between the closing element (50) and the housing (2).

6. Coupling head (1) of one of the preceding claims, **characterised in that** the constructional element is a filter element.

7. Coupling head (1) of one of the preceding claims, **characterised in that** the constructional element is a valve element (51) which is supported by a spring (52) at the closing element (50) and which is biased by a spring force applied by the spring (52) towards its valve seat (53).

8. Coupling head (1) of claim 7, **characterised in that** the valve element (51) and the spring (52) and/or a filter element are inserted through the opening (49) which can be closed by the closing element (50) into the chamber (5) and the valve element (51) and the spring (52) and/or a filter element are/is secured in the chamber (5) by a closure of the opening (49) with the closing element (50).

9. Coupling head (1) of claim 7 or 8, **characterised in that** the valve seat (53) is formed or supported by a wall (54) of the housing (2) which limits the chamber (5) in the direction of its longitudinal axis (6).

10. Coupling head (1) of one of the preceding claims, **characterised in that** the constructional element arranged in the chamber (5) is a valve element (51) with which a valve (48) is formed, the valve (48) being transferrable from a closed position into an open position by a coupling of the coupling head (1) to a counter coupling head.

11. Coupling head of claim 10 when referring back to one of claims 7 to 9, **characterised in that** an actuation element (55) is provided, where by an actuation of the actuation element (55) it is possible to move the valve element (51) against the spring force applied by the spring (52) upon the valve element (51).

12. Coupling head of claim 11, **characterised in that** the actuation element (55) is coupled by an uni-directional coupling to the valve element (51).

13. Coupling head (1) of claim 11 or 12, **characterised in that** the actuation element (55) is arranged at the side of the chamber (5) opposite to the closing element (50).

14. Coupling head (1) of one of claims 11 to 13, **characterised in that** an inner surface (63) of the housing (2) comprises a guiding surface by which a movement of the actuation element (55) is guided during its actuation.

15. Coupling head according to one of claims 11 to 14, **characterised in that** the actuation element (55) is coupled to the housing (2) by a latching or locking connection (62) comprising a play.

16. Coupling head (1) of one of claims 11 to 15, **characterised in that** a movement of the actuation element (55) into the direction of its non-actuated position is limited by a stop (80).

17. Coupling head (1) of one of claims 11 to 16 when referring back to claim 9, **characterised in that** a recess (59) is provided in the wall (54), the actuation element (55) extending through the recess (59).

18. Coupling head (1) of one of claims 11 to 16 when referring back to claim 7 or 8, **characterised in that** the housing (2) of the coupling head (1) comprises a through recess (73) which is divided by a separating element (74) which is arranged in the through recess (73) or formed in the through recess (73) into a portion (75) for the actuation element (55) and a portion (76) forming the chamber (5).

19. Coupling head (1) of claim 18, **characterised in that** the separating element (74) forms the valve seat (53) for the valve element (51).

20. Coupling head (1) of claim 19, **characterised in that** the actuation element (55), the separating element (74), the valve element (51), the spring (52) and optionally a filter element are inserted into the through recess (73) through an opening of the through recess (73) which forms the opening (49) of the chamber (5) being closable by the closing element (50) and the actuation element (55), the separating element (74), the valve element (51), the spring (52) and optionally a filter element are secured in the through recess (73) by the closure of the opening (49) with the closing element (50).

## Revendications

1. Tête de couplage (1) pour la liaison pneumatique d'un véhicule tracteur et d'une remorque ou pour la liaison pneumatique de deux remorques, avec
a) un boîtier (2),
b) une chambre (5) disposée dans le boîtier (2),
c) un composant, plus particulièrement un élément filtrant ou un élément de soupape (51), qui est disposé dans la chambre (5) et
d) un élément d'obturation (50) qui obture une ouverture (49) de la chambre (5), **caractérisée en ce que**
e) un élément d'encliquetage ou de blocage (68, 89) et une saillie ou un épaulement (69) sont réalisés d'une seule pièce avec l'élément d'obturation (50) ou le boîtier (2) et l'élément d'obturation (50) est monté sur le boîtier (2) en formant une liaison d'encliquetage ou de blocage (67, 93) dans laquelle l'élément d'encliquetage ou de blocage (68, 89) du boîtier (2) ou de l'élément d'obturation (50) s'accroche à l'arrière de la saillie ou de l'épaulement (69) de l'élément d'obturation (50) ou du boîtier (2).

2. Tête de couplage (1) selon la revendication 1, **caractérisée en ce que**
a) une surface interne du boîtier (2), qui délimite un évidement pour l'élément d'obturation (50), comprend la saillie ou l'épaulement (69) et
b) l'élément d'encliquetage ou de blocage (68) est un élément d'encliquetage ou de blocage (68) réalisé d'une seule pièce avec l'élément d'obturation (50).

3. Tête de couplage (1) selon l'une des revendications précédentes, **caractérisée en ce que** l'élément d'obturation (50) est monté par l'intermédiaire d'une liaison à baïonnette (83) avec le boîtier (2), la liaison à baïonnette (83) étant sécurisée par l'intermédiaire de la liaison d'encliquetage ou de blocage (93) contre une rotation pour le détachement de la liaison à baïonnette (83).

4. Tête de couplage (1) selon l'une des revendications précédentes, **caractérisée en ce que** le boîtier (2) et/ou l'élément d'obturation (50) sont/est constitué(s) de matière plastique.

5. Tête de couplage (1) selon l'une des revendications précédentes, **caractérisée en ce qu'**un élément d'étanchéité (70) est disposé entre l'élément d'obturation (50) et le boîtier (2), qui étanchéifie la chambre (5).

6. Tête de couplage (1) selon l'une des revendications précédentes, **caractérisée en ce que** le composant est un élément filtrant.

7. Tête de couplage (1) selon l'une des revendications précédentes, **caractérisée en ce que** le composant est un élément de soupape (51), qui s'appuie par l'intermédiaire d'un ressort (52) contre l'élément d'obturation (50) et qui est sollicité par la force élastique exercée par le ressort (52) en direction de son siège de soupape (53).

8. Tête de couplage (1) selon la revendication 7, **caractérisée en ce que** l'élément de soupape (51) et le ressort (52) et/ou un élément filtrant sont/est inséré(s) dans la chambre (5) à travers l'ouverture (49), qui peut être obturée avec l'élément d'obturation (50) et sécurisé(s) dans la chambre (5) par l'obturation de l'ouverture (49) avec l'élément d'obturation (50).

9. Tête de couplage (1) selon la revendication 7 ou 8, **caractérisée en ce que** le siège de soupape (53) forme ou est supportée par une paroi (54) du boîtier (2) délimitant la chambre (5) en direction de son axe longitudinal (6).

10. Tête de couplage (1) selon l'une des revendications précédentes, **caractérisée en ce que** le composant disposé dans la chambre (5) est un élément de soupape (51) avec lequel une soupape (48) est formée, la soupape (48) pouvant être déplacée, par le couplage de la tête de couplage (1) avec une contre-tête de couplage, d'une position fermée vers une position ouverte.

11. Tête de couplage (1) selon la revendication 10 en référence à une des revendications 7 à 9, **caractérisée en ce qu'**un élément d'actionnement (55) est prévu avec l'actionnement duquel l'élément de soupape (51) peut être déplacé contre la force élastique exercée par le ressort (52) sur l'élément de soupape (51).

12. Tête de couplage (1) selon la revendication 11, **caractérisée en ce que** l'élément d'actionnement (55) est couplé de manière fonctionnelle d'un seul côté avec l'élément de soupape (51).

13. Tête de couplage (1) selon la revendication 11 ou 12, **caractérisée en ce que** l'élément d'actionnement (55) est disposé sur un côté de la chambre (5) opposé à l'élément d'obturation (50).

14. Tête de couplage (1) selon l'une des revendications 11 à 13, **caractérisée en ce qu'**une surface interne (63) du boîtier (2) comprend une surface de guidage qui permet de guider un déplacement de l'élément d'actionnement (55) lors de son actionnement.

15. Tête de couplage (1) selon l'une des revendications 11 à 14, **caractérisée en ce que** l'élément d'actionnement (55) est couplé avec le boîtier (2) par l'intermédiaire d'une liaison d'encliquetage ou de blocage (62) présentant un jeu.

16. Tête de couplage (1) selon l'une des revendications 11 à 15, **caractérisée en ce qu'**un déplacement de l'élément d'actionnement (55) en direction de sa position non actionnée est limitée par une butée (80).

17. Tête de couplage (1) selon l'une des revendications 11 à 16 en référence à la revendication 9, **caractérisée en ce que**, dans la paroi (54), est prévu un évidement (59) à travers lequel s'étend l'élément d'actionnement (55).

18. Tête de couplage (1) selon l'une des revendications 11 à 16 en référence à la revendication 7 ou 8, **caractérisée en ce que** le boîtier (2) de la tête de couplage (1) comprend un évidement de passage (73) qui est divisé, par un élément de séparation (74) disposé ou réalisé dans l'évidement de passage (73), en une partie (75) pour l'élément d'actionnement (55) et en une partie (76) formant la chambre (5).

19. Tête de couplage (1) selon la revendication 18, **caractérisée en ce que** l'élément de séparation (74) forme le siège de soupape (53) pour l'élément de soupape (51).

20. Tête de couplage (1) selon la revendication 19, **caractérisée en ce que** l'élément d'actionnement (55), l'élément de séparation (74), l'élément de soupape (51), le ressort (52) et, en option, un élément filtrant, sont insérés, à travers une ouverture de l'évidement de passage (73), qui forme l'ouverture (49) de la chambre (5) pouvant être obturée par l'élément d'obturation (50), dans l'évidement de passage (73) et sécurisés dans l'évidement de passage (73) par obturation de l'ouverture (49) avec l'élément d'obturation (50).
